(19) Europäisches Patentamt / European Patent Office / Office européen des brevets

(11) **EP 4 567 736 A1**

(12) **EUROPEAN PATENT APPLICATION**
published in accordance with Art. 153(4) EPC

(43) Date of publication:
**11.06.2025 Bulletin 2025/24**

(21) Application number: **23856569.1**

(22) Date of filing: **21.08.2023**

(51) International Patent Classification (IPC):
*G06T 11/60* (2006.01)  *G06N 3/04* (2023.01)
*G06T 9/00* (2006.01)  *G06V 10/44* (2022.01)
*G06V 10/74* (2022.01)  *G06V 30/148* (2022.01)
*G06V 30/19* (2022.01)  *G06V 10/82* (2022.01)

(86) International application number:
**PCT/CN2023/114002**

(87) International publication number:
**WO 2024/041479 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.08.2022 CN 202211005409**

(71) Applicant: **Huawei Technologies Co., Ltd.
Shenzhen, Guangdong 518129 (CN)**

(72) Inventors:
- **LIU, Zhiguang
  Shenzhen, Guangdong 518129 (CN)**
- **BAI, Haoli
  Shenzhen, Guangdong 518129 (CN)**

- **MENG, Xiaojun
  Shenzhen, Guangdong 518129 (CN)**
- **LI, Wentao
  Shenzhen, Guangdong 518129 (CN)**
- **XIE, Nian
  Shenzhen, Guangdong 518129 (CN)**
- **WANG, Liangwei
  Shenzhen, Guangdong 518129 (CN)**
- **HOU, Lu
  Shenzhen, Guangdong 518129 (CN)**
- **JIANG, Xin
  Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD AND APPARATUS**

(57)    A data processing method is applied to processing of an image including a text, relates to the field of artificial intelligence, and includes: obtaining a first feature representation and a second feature representation, where the second feature representation is a text feature of a first text, and the first text is text content included in an image; and obtaining a third feature representation based on the first feature representation and the second feature representation by using a target encoder, where the third feature representation is used to execute a downstream task, and a similarity between an execution result and a corresponding label and a similarity between the first feature representation and the second feature representation are used to update an image encoder. In this application, a dual-tower manner may be first used to improve a capability of alignment between an image and a text, and then a single-tower structure is used to further enhance an interactive learning capability for a feature.

FIG. 7

EP 4 567 736 A1

**Description**

This application claims priority to Chinese Patent Application No. 202211005409.3, filed with the China National Intellectual Property Administration on August 22, 2022 and entitled "DATA PROCESSING METHOD AND APPARATUS", which is incorporated herein by reference in its entirety.

## TECHNICAL FIELD

This application relates to the field of artificial intelligence, and in particular, to a data processing method and apparatus.

## BACKGROUND

Artificial intelligence (Artificial Intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. In other words, artificial intelligence is a branch in computer science, and aims to understand the essence of intelligence and produce a new intelligent machine that can react in a manner similar to human intelligence. Artificial intelligence is to study design principles and implementation methods of various intelligent machines, so that the machines have perception, inference, and decision-making functions.

A text modeling capability in an alignment manner used by an existing cross-modal visual language model (or may be referred to as a multi-modal model or a multi-modal language model) is relatively weak. Text-image alignment (text-image alignment, TIA) is used as an example. The TIA only simply determines whether a character is blocked, but does not well consider semantic information between blocked characters. As a result, a model does not really understand content of a document.

A current multi-modal model has a relatively weak text-image alignment capability, in other words, does not have a capability of aligning a text element with an image element. Text-image matching (text-image matching, TIM) is used as an example. A training target is used to determine whether a global text matches a global scanned document image. Learning difficulty of this task is low, and consequently a trained model does not have a capability of aligning a text element with an image element.

## SUMMARY

This application provides a data processing method, so that features extracted by an image encoder and a text encoder can contain more accurate semantic information of a text in an image, thereby enhancing a text-image matching capability of a subsequent network. In this application, a dual-tower manner may be first used to improve a capability of alignment between an image and a text, and then a single-tower structure is used to further enhance an interactive learning capability for a feature.

According to a first aspect, this application provides a data processing method, including: obtaining a first feature representation and a second feature representation, where the first feature representation is obtained based on an image feature obtained by processing an image by an image encoder, the second feature representation is a text feature of a first text, and the first text is text content included in the image; obtaining a third feature representation based on the first feature representation and the second feature representation by using a target encoder, where the target encoder is configured to implement interaction between feature representations; and executing a downstream task based on the third feature representation, to obtain an execution result, where a similarity between the execution result and a corresponding label and a similarity between the first feature representation and the second feature representation are used to update the image encoder.

In this application, a capability of matching between a text and an image is enhanced through text-image contrastive learning (text-image contrastive learning, TIC). Specifically, for the image feature of the image and a text feature of a text, the image encoder is updated by using a loss constructed through similarity contrast (if the text feature is obtained by using a text encoder, the text encoder may also be updated). Although the image feature of the image and the text feature of the text in the image are not same-modal features, because the text is a text in the image, and the image feature also contains semantic information of the text, the image feature and the text feature (belonging to the same image) are associated in a semantic dimension (or another information dimension). The foregoing similarity may include a similarity between semantic information in the image and semantic information of the text. Therefore, the image encoder and the text encoder (if the text encoder exists in the architecture) are updated based on a loss constructed based on the similarity, so that features extracted by the image encoder and the text encoder can contain more accurate semantic information of the text in the image, thereby enhancing a text-image matching capability of a subsequent network.

In addition, in an architecture of a cross-modal language model, the image encoder, the text encoder, and a target encoder configured to provide interaction information between features are included. In this application, the image encoder and the text encoder are updated based on a loss constructed based on a similarity between intermediate outputs (that is, outputs of the image encoder and the text encoder) of the model, so that a downstream task can be implemented based on feature representations output by the image encoder and the text encoder (where precision is not higher than that of a downstream task executed based on a feature representation output by the target encoder). In some scenarios, because an amount of data to be processed in the downstream task is relatively large, coarse sorting may be performed by using the feature representations output by the image encoder and the text encoder, and fine sorting may be performed by using the feature representation output by the target encoder, to improve a recall rate.

In a possible implementation, the second feature representation is a text feature obtained by processing the first text by a text encoder, and the similarity between the first feature representation and the second feature representation is further used to update the text encoder.

In a possible implementation, the similarity is related to a similarity between text semantic information contained in the image and semantic information of a text.

In a possible implementation, the similarity between the execution result and the corresponding label is further used to update the target encoder.

In a possible implementation,

the first text is all texts included in the image; or
the first text is a part of all texts included in the image.
In a possible implementation,
the image is a partial image region extracted from an original input image, and a text included in the image is a part of a text included in the input image; or
the image is an original input image.

In a possible implementation, the image may be an original input image (or may be a partial image of an original input image, but the partial image includes all texts of the input image). The first text may be all texts included in the image.

In a possible implementation, the image may be an original input image (or may be a partial image of an original input image, but the partial image includes all texts of the input image). The first text may be a part of texts included in the image.

In a possible implementation, the image may be a partial image region obtained by extracting the original input image, the partial image region includes a part of texts in all texts in the original input image, and the first text may be all the texts included in the image.

In a possible implementation, the image may be a partial image region obtained by extracting the original input image, the partial image region includes a part of texts in all texts in the original input image, and the first text may be a part of texts included in the image.

In a possible implementation, the input original image may include one or more rows of texts, or the input original image may include one or more columns of texts. Optionally, the image may include one row or one column of text of the original image, and the first text may be one or more text units.

During text-image contrastive learning, a loss used to update the image encoder and the text encoder may be constructed based on a similarity between the image feature of the image and the text feature of the first text. Optionally, the similarity is related to a similarity between text semantic information contained in the image and semantic information of the text.

It should be understood that the loss used to update the image encoder and the text encoder may be further constructed based on a similarity between the image feature of the image and a text feature of a text that is not included in the image. A difference lies in that the image feature of the image and the text feature of the text in the image are a positive example (that is, a corresponding label has a high similarity), and the image feature of the image and the text feature of the text that is not included in the image are a negative example (that is, a corresponding label has a low similarity).

In a possible implementation, for a same original input image, an image feature corresponding to the entire input image may be contrasted with text features of all texts included in the input image, or an image feature of a partial image region in the input image may be contrasted with text features of a part of texts included in the input image, or an image feature corresponding to the entire input image may be contrasted with text features of a part of texts included in the input image, or a combination of the foregoing manners may be used.

In a possible implementation, for a same original input image, text features corresponding to all texts included in the input image may be contrasted with an image feature of a partial image region in the input image, or text features of a part of texts included in the input image may be contrasted with an image feature of a partial image region in the input image, or text features corresponding to all texts included in the input image may be contrasted with an image feature corresponding to the entire input image.

In a possible implementation, for different original input images, text features corresponding to all texts included in a part of input images may be contrasted with an image feature of a partial image region in the input image, or text features of a part of texts included in a part of input images may be contrasted with an image feature of a partial image region in the input image, or text features corresponding to all texts included in a part of input images may be contrasted with an image feature corresponding to the entire input image, or a combination of the foregoing manners may be used.

In a possible implementation, for different original input images, text features corresponding to all texts included in a part of input images may be contrasted with an image feature of a partial image region in the input image, or text features of a part of texts included in a part of input images may be contrasted with an image feature of a partial image region in the input image, or text features corresponding to all texts included in a part of input images may be contrasted with an image feature corresponding to the entire input image.

In a possible implementation, the first text includes a first sub-text and a second sub-text, the second feature representation includes a first sub-feature corresponding to the first sub-text and a second sub-feature corresponding to the second sub-text, the first sub-feature does not include a position of the first sub-text in the image, and the second sub-feature includes a position of the second sub-text in the image; and the executing a downstream task based on the third feature representation includes: predicting a first position of the first sub-text in the image based on the third feature representation, where a similarity between the first position and a corresponding label is used to update the image encoder and the target encoder.

In a possible implementation, the image includes a plurality of image blocks, the first position is an image block in which the first sub-text is predicted to be located, and the label is an image block in which the first sub-text is actually located.

In this application, BGM is proposed in a single-tower part to improve a spatial layout sensing capability, thereby helping improve performance of a model in a position-sensitive task. For example, in information extraction, a key-value pair is usually adjacent paired data. Because the model has learned a capability of sensing position and layout information in a pre-training phase, the model has good performance in an information extraction task.

In a possible implementation, the first feature representation includes a third sub-feature and a fourth sub-feature, and the method further includes: obtaining, based on the fourth sub-feature, a second position of the fourth sub-feature in the first feature representation, and a third position of the third sub-feature in the first feature representation, a predicted feature value at the third position, where a similarity between the predicted feature value and the third sub-feature is used to update the image encoder.

In a possible implementation, the obtaining, based on the fourth sub-feature, a second position of the fourth sub-feature in the first feature representation, and a third position of the third sub-feature in the first feature representation, a predicted feature value at the third position includes: obtaining a fourth feature representation by using a self-attention network based on the fourth sub-feature, the second position of the fourth sub-feature in the first feature representation, and the third position of the third sub-feature in the first feature representation; and obtaining the predicted feature value at the third position based on the fourth feature representation by using a prediction network.

In a possible implementation, to improve an image representation learning capability, a loss may be further constructed based on an image feature. Specifically, a part of an image may be masked, image reconstruction is performed on an image in a masked region by using a result obtained by the image encoder, and a network is updated based on a difference between a reconstruction result and a pixel value of a real image in the masked region. However, an existing method has a relatively weak image representation learning capability. Specifically, to reduce processing example overheads of a model, an image needs to be compressed to a relatively low resolution (for example, 224x224). When the image includes an intensive text, it is difficult for a pixel in the image to express accurate text information, and an image representation learning capability of a trained model is limited.

In this embodiment of this application, to improve the image representation learning capability, the image feature of the image instead of the image may be masked, feature reconstruction is performed on an image feature of the masked region, and the network is updated based on a difference between a reconstruction result and the image feature of the masked region. Compared with a pixel value, the image feature can carry richer image information and text information. Therefore, an image representation learning capability of a trained network can be improved. The foregoing manner may be referred to as mask image modeling (mask image modeling, MIM).

According to a second aspect, this application provides a data processing method. The method includes:

obtaining an image;
processing the image by using an image encoder, to obtain a first feature representation;
processing, by using a text encoder, a text included in the image, to obtain a second feature representation;
obtaining a third feature representation based on the first feature representation and the second feature representation by using a target encoder, where the target encoder is configured to implement interaction between feature representations; and
executing a downstream task based on the third feature representation, to obtain an execution result.

According to a third aspect, this application provides a data processing apparatus, including:

an obtaining module, configured to obtain a first feature representation and a second feature representation, where the first feature representation is obtained based on an image feature obtained by processing an image by an image encoder, the second feature representation is a text feature of a first text, the first text is text content included in the image, and a similarity between the first feature representation and the second feature representation is used to update the image encoder;
an encoding module, configured to obtain a third feature representation based on the first feature representation and the second feature representation by using a target encoder, where the target encoder is configured to implement interaction between feature representations; and
a task execution module, configured to execute a downstream task based on the third feature representation, to obtain an execution result.

In a possible implementation, the second feature representation is a text feature obtained by processing the first text by a text encoder, and the similarity between the first feature representation and the second feature representation is further used to update the text encoder.
In a possible implementation, the similarity is related to a similarity between text semantic information contained in the image and semantic information of a text.
In a possible implementation,

the first text is all texts included in the image; or
the first text is a part of all texts included in the image.

In a possible implementation,

the image is a partial image region extracted from an original input image, and a text included in the image is a part of a text included in the input image; or
the image is an original input image.

In a possible implementation, the first text includes a first sub-text and a second sub-text, the second feature representation includes a first sub-feature corresponding to the first sub-text and a second sub-feature corresponding to the second sub-text, the first sub-feature does not include a position of the first sub-text in the image, and the second sub-feature includes a position of the second sub-text in the image; and
the task execution module is specifically configured to:
predict a first position of the first sub-text in the image based on the third feature representation, where a similarity between the first position and a corresponding label is used to update the image encoder and the target encoder.
In a possible implementation, the image includes a plurality of image blocks, the first position is an image block in which the first sub-text is predicted to be located, and the label is an image block in which the first sub-text is actually located.
In a possible implementation, the first feature representation includes a third sub-feature and a fourth sub-feature, and the method further includes:
a prediction module, configured to obtain, based on the fourth sub-feature, a second position of the fourth sub-feature in the first feature representation, and a third position of the third sub-feature in the first feature representation, a predicted feature value at the third position, where a similarity between the predicted feature value and the third sub-feature is used to update the image encoder.
In a possible implementation, the prediction module is specifically configured to:

obtain a fourth feature representation by using a self-attention network based on the fourth sub-feature, the second position of the fourth sub-feature in the first feature representation, and the third position of the third sub-feature in the first feature representation; and
obtain the predicted feature value at the third position based on the fourth feature representation by using a prediction network.

According to a fourth aspect, this application provides a data processing apparatus. The apparatus includes:

an obtaining module, configured to obtain an image;
an encoding module, configured to: process the image by using an image encoder, to obtain a first feature representation;

process, by using a text encoder, a text included in the image, to obtain a second feature representation; and obtain a third feature representation based on the first feature representation and the second feature representation by using a target encoder, where the target encoder is configured to implement interaction between feature representations; and

a task execution module, configured to execute a downstream task based on the third feature representation, to obtain an execution result.

According to a fifth aspect, an embodiment of this application provides a training apparatus. The apparatus may include a memory, a processor, and a bus system. The memory is configured to store a program, and the processor is configured to execute the program in the memory, to perform the method according to any one of the first aspect and the optional implementations of the first aspect.

According to a sixth aspect, an embodiment of this application provides an execution apparatus. The apparatus may include a memory, a processor, and a bus system. The memory is configured to store a program, and the processor is configured to execute the program in the memory, to perform the method according to any one of the second aspect and the optional implementations of the second aspect.

According to a seventh aspect, an embodiment of this application provides a computer-readable storage medium. The computer-readable storage medium stores a computer program. When the computer program is run on a computer, the computer is enabled to perform the method according to any one of the first aspect and the optional implementations of the first aspect and the method according to any one of the second aspect and the optional implementations of the second aspect.

According to an eighth aspect, an embodiment of this application provides a computer program. When the computer program is run on a computer, the computer is enabled to perform the method according to any one of the first aspect and the optional implementations of the first aspect and the method according to any one of the second aspect and the optional implementations of the second aspect.

According to a ninth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete component.

## BRIEF DESCRIPTION OF DRAWINGS

FIG. 1A is a diagram of a structure of an artificial intelligence body framework;

FIG. 1B and FIG. 1C are diagrams of application system frameworks according to the present invention;

FIG. 1D is a diagram of an optional hardware structure of a terminal;

FIG. 2 is a diagram of a structure of a server;

FIG. 3 is a diagram of a system architecture according to this application;

FIG. 4 shows a cloud service procedure;

FIG. 5 shows a cloud service procedure;

FIG. 6 is a diagram of a system architecture according to this application;

FIG. 7 is a schematic flowchart of a data processing method according to an embodiment of this application;

FIG. 8 to FIG. 10 each are a schematic flowchart of a data processing method according to an embodiment of this application;

FIG. 11 is a diagram of a system architecture according to this application;

FIG. 12 is a diagram of a structure of a data processing apparatus according to an embodiment of this application;

FIG. 13 is a diagram of a structure of an execution device according to an embodiment of this application;

FIG. 14 is a diagram of a structure of a training device according to an embodiment of this application; and

FIG. 15 is a diagram of a structure of a chip according to an embodiment of this application.

## DESCRIPTION OF EMBODIMENTS

The following describes embodiments of the present invention with reference to accompanying drawings in embodiments of the present invention. Terms used in embodiments of the present invention are merely used to explain specific embodiments of the present invention, but are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover non-exclusive inclusion, so that a process, method, system, product, or device including a series of units is not necessarily limited to those units, but may include other units that are not clearly listed or are inherent to the process, method, product, or device.

The terms "substantially (substantially)", "about (about)", and the like are used herein as approximation terms rather than as degree terms, and are intended to take into account inherent deviations of measured values or calculated values that are known to a person of ordinary skill in the art. In addition, when embodiments of the present invention are described, "may (may)" is used to mean "one or more possible embodiments". The terms "use (use)", "using (using)", and "used (used)" used herein may be considered to be synonymous with the terms "utilize (utilize)", "utilizing (utilizing)", and "utilized (utilized)", respectively. In addition, the term "example (example)" is intended to refer to an example or an illustration.

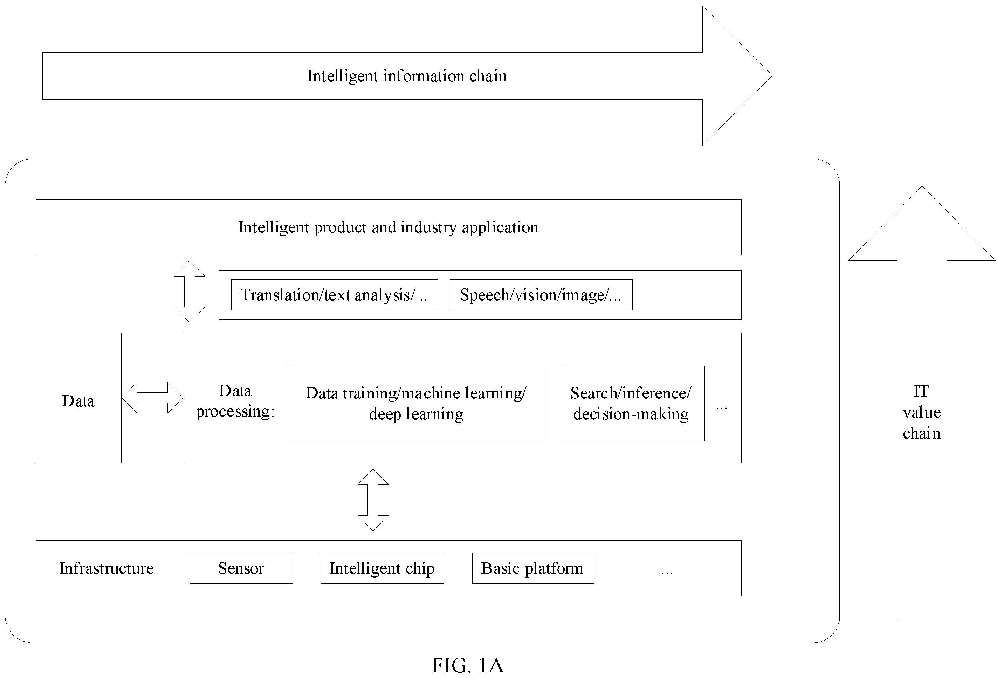

First, an overall working process of an artificial intelligence system is described. Refer to FIG. 1A. FIG. 1A is a diagram of a structure of an artificial intelligence body framework. The following describes the artificial intelligence body framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from underlying infrastructure and information (providing and processing technology implementation) of artificial intelligence to an industrial ecological process of a system.

(1) Infrastructure

The infrastructure provides computing capability support for an artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection network, and the like. For example, the sensor communicates with the outside to obtain data, and the data is provided for an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

The data processing usually includes a manner, for example, data training, machine learning, deep learning, search, inference, or decision-making.

Machine learning and deep learning may perform symbolic and formalized intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. Typical functions are searching and matching.

Decision-making is a process of making a decision after intelligent information is inferred, and usually provides functions such as classification, sorting, and prediction.

(4) General-purpose capability

After data processing mentioned above is performed on data, some general-purpose capabilities may be further formed based on a data processing result. For example, the general-purpose capabilities may be an algorithm or a general system, for example, translation, text analysis, computer vision processing, speech recognition, and image recognition.

(5) Intelligent product and industry application

The intelligent product and industry application mean a product and an application of an artificial intelligence system in various fields, and are a package of an overall solution of artificial intelligence, so that decision-making for intelligent information is productized and an application is implemented. Application fields thereof mainly include an intelligent terminal, smart transportation, intelligent healthcare, autonomous driving, a smart city, and the like.

This application may be applied to the natural language processing field in the artificial intelligence field. The following uses natural language processing as an example to describe a plurality of application scenarios implemented in products.

First, an application scenario of this application is described. This application may be applied to, but is not limited to, an application having a text processing function for an image (which may be referred to as a cross-modal language processing application for short below), a cloud service provided by a cloud server, or the like. Descriptions are separately provided below.

1. Cross-modal language processing application

A product form in embodiments of this application may be a cross-modal language processing application. The cross-modal language processing application may run on a terminal device or a server on a cloud side.

In a possible implementation, the cross-modal language processing application may implement a processing task related to a text in an input image based on the image, to obtain a processing result.

For example, the processing task related to the text in the image may include information extraction, contract review, and retrieval and question and answer. In an information extraction scenario, a user may customize a concerned field in an image, such as party A, party B, or a contract number. In a contract review scenario, related personnel may check whether contracts of different versions are consistent, for example, whether a change in a name of party A introduces a risk clause. In a retrieval and question and answer scenario, a user can quickly retrieve a related text in an image by raising a question or a keyword, and find a possible answer in the text.

For example, the foregoing image is an image captured by using a device such as a camera, a printer, or a scanner. For example, in an application scenario, in fields such as finance, accounting, and tax, an enterprise needs to scan a file such as a receipt or an invoice to obtain an image file, and recognize a text in the image file to extract text information, to implement functions such as digital file archiving, quick file indexing, or file analysis. In another application scenario, if a user needs to enter information on a certificate such as an identity card, a driving license, a vehicle license, or a passport, the user may capture an image of the certificate by using a camera, and recognize a text in the image to extract key information and the like.

It should be understood that the examples herein are merely for ease of understanding the application scenarios of embodiments of this application, and no exhaustive description of the application scenarios of embodiments of this application is provided.

In a possible implementation, a user may start a cross-modal language processing application installed on a terminal device, and input an image. The cross-modal language processing application may process the image by using a cross-modal language model obtained through training according to the method provided in embodiments of this application, and present a processing result to the user (a presentation manner may be but is not limited to displaying, saving, or uploading to a cloud side).

In a possible implementation, a user may start a cross-modal language processing application installed on a terminal device, and input an image. The cross-modal language processing application may send the image to a server on a cloud side. The server on the cloud side processes the image by using a cross-modal language model obtained through training according to the method provided in embodiments of this application, and returns a processing result to the terminal device. The terminal device may present the processing result to the user (a presentation manner may be but is not limited to display, saving, or uploading to the cloud side).

The following describes the cross-modal language processing application in embodiments of this application from perspectives of a functional architecture and a product architecture for implementing a function.

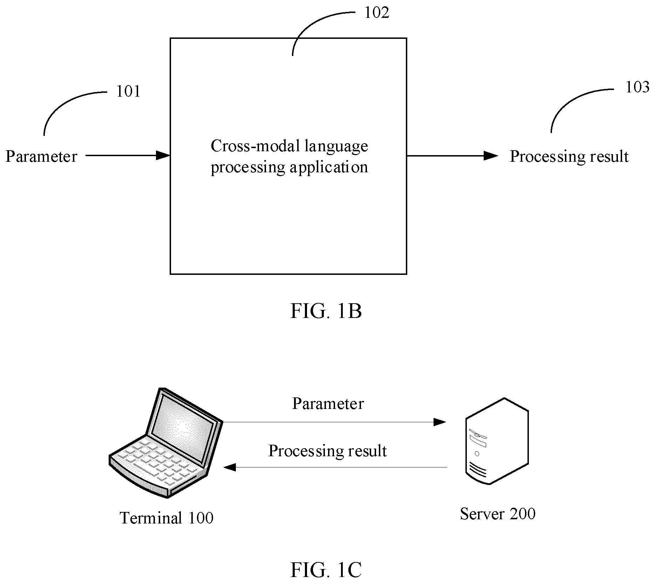

Refer to FIG. 1B. FIG. 1B is a diagram of a functional architecture of a cross-modal language processing application according to an embodiment of this application.

In a possible implementation, as shown in FIG. 1B, the cross-modal language processing application 102 may receive an input parameter 101 (for example, including an image) and generate a processing result 103. The cross-modal language processing application 102 may be executed on (for example) at least one computer system, and include computer code. When the computer code is executed by one or more computers, the computer is enabled to execute a cross-modal language model obtained through training by using the method provided in embodiments of this application.

Refer to FIG. 1C. FIG. 1C is a diagram of an entity architecture of running a cross-modal language processing application according to an embodiment of this application.

Refer to FIG. 1C. FIG. 1C is a diagram of a system architecture. The system may include a terminal 100 and a server 200. The server 200 may include one or more servers (in FIG. 1C, an example in which one server is included is used for description), and the server 200 may provide a cross-modal language processing function service for one or more terminals.

A cross-modal language processing application may be installed on the terminal 100, or a web page related to a cross-modal language processing function may be opened. The application and the web page may provide an interface. The terminal 100 may receive a related parameter input by a user on the cross-modal language processing function interface, and send the parameter to the server 200. The server 200 may obtain a processing result based on the received parameter, and return the processing result to the terminal 100.

It should be understood that in some optional implementations, the terminal 100 may alternatively autonomously complete an action of obtaining a processing result based on a received parameter without cooperation of the server. This is not limited in this embodiment of this application.

The following describes a product form of the terminal 100 in FIG. 1C.

The terminal 100 in this embodiment of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

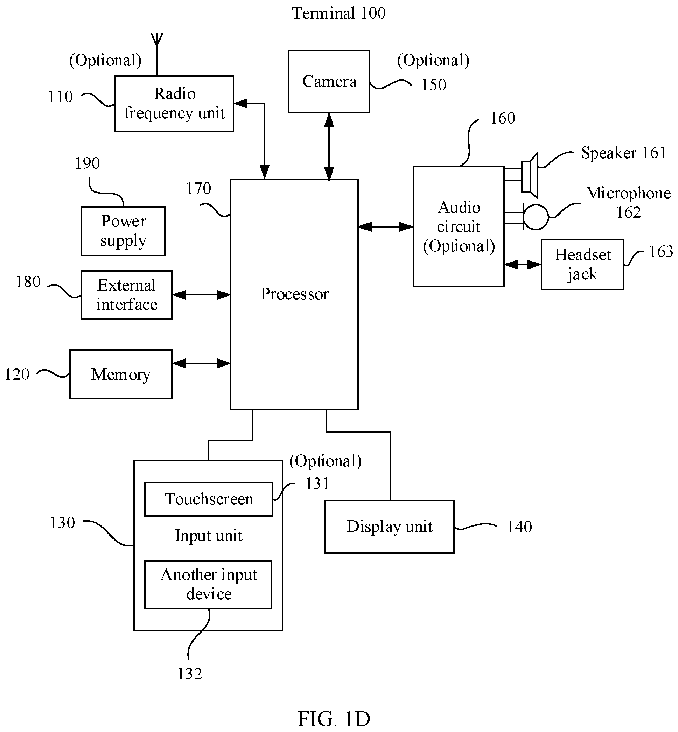

FIG. 1D is a diagram of an optional hardware structure of a terminal 100.

Refer to FIG. 1D. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-functional device and does not constitute a limitation on the terminal or the multi-functional device. The terminal or the multi-functional device may include more or fewer components than those shown in the figure, or combine some components, or have different components.

The input unit 130 may be configured to receive entered digit or character information, and generate a key signal input related to a user setting and function control of the portable multi-functional apparatus. Specifically, the input unit 130 may include a touchscreen 131 (optional) and/or another input device 132. The touchscreen 131 may collect a touch operation of a user on or near the touchscreen 131 (for example, an operation performed by the user on the touchscreen or near the touchscreen by using any proper object, for example, a finger, a joint, or a stylus), and drive a corresponding connection apparatus based on a preset program. The touchscreen may detect a touch action of the user on the touchscreen, convert the touch action into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared type, and a surface acoustic wave type. In addition to the touchscreen 131, the input unit 130 may further include the another input device. Specifically, the another input device 132 may include, but is not limited to, one or more of a physical keyboard, a function button (for example, a volume control button 132 or a power on/off button 133), a trackball, a mouse, or a joystick.

The input device 132 may receive an input image or the like.

The display unit 140 may be configured to display information input by the user or information provided for the user, various menus of the terminal 100, an interaction interface, file display, and/or playing of any multimedia file. In this embodiment of this application, the display unit 140 may be configured to display an interface of a cross-modal language processing application, a processing result, or the like.

The memory 120 may be configured to store instructions and data. The memory 120 may mainly include an instruction storage area and a data storage area. The data storage area may store various kinds of data such as a multimedia file and a text; and the instruction storage area may store software units such as an operating system, an application, and instructions required by at least one function, or subsets and extended sets thereof. The memory 120 may further include a non-volatile random access memory, and provide hardware, software, a data resource, and the like in a management and calculation processing device for the processor 170, to support control on software and an application. The memory 120 is further configured to: store a multimedia file, and store a running program and application.

The processor 170 is a control center of the terminal 100, connects various parts of the entire terminal 100 by using various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It may be understood that the modem processor may alternatively not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component in a calculation processing device, and read and process data in software, especially read and process the data and the program in the memory 120, so that functional modules perform corresponding functions, to control a corresponding component to perform an action as required by an instruction.

The memory 120 may be configured to store software code related to the data processing method. The processor 170 may perform steps of the data processing method of a chip, or may schedule another unit (for example, the input unit 130 and the display unit 140) to implement a corresponding function.

The radio frequency unit 110 (optional) may be configured to receive and send signals in an information receiving and sending process or a call process. For example, after receiving downlink information of a base station, the radio frequency unit 110 sends the downlink information to the processor 170 for processing. In addition, the radio frequency unit 110 sends related uplink data to the base station. Generally, the RF circuit includes but is not limited to an antenna, at least one amplifier, a transceiver, a coupler, a low noise amplifier (Low Noise Amplifier, LNA), a duplexer, or the like. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short messaging service (Short Messaging Service, SMS), and the like.

In this embodiment of this application, the radio frequency unit 110 may send an image to a server 200, and receive a processing result sent by the server 200.

It should be understood that the radio frequency unit 110 is optional, and may be replaced with another communication interface, which, for example, may be a network interface.

The terminal 100 further includes the power supply 190 (such as a battery) for supplying power to the components. Preferably, the power supply may be logically connected to the processor 170 by using a power management system, thereby implementing functions such as charging management, discharging management, and power consumption management by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of the methods described below may be applied to the terminal 100 shown in FIG. 1D.

The following describes a product form of the server 200 in FIG. 1C.

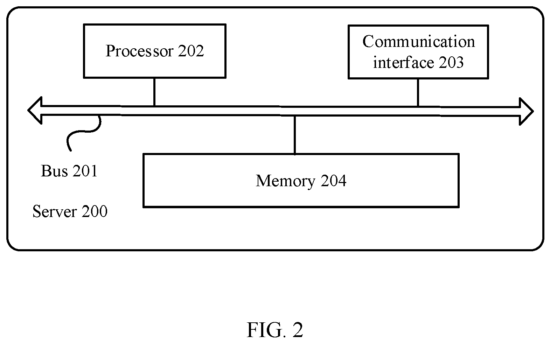

FIG. 2 provides a diagram of a structure of a server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 2, but this does not mean that there is only one bus or only one type of bus.

The processor 202 may be any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be centralized or distributed devices. The processor (for example, the processor 170 and the processor 202) in the terminal 100 and the server 200 may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of hardware circuits. For example, the processor may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

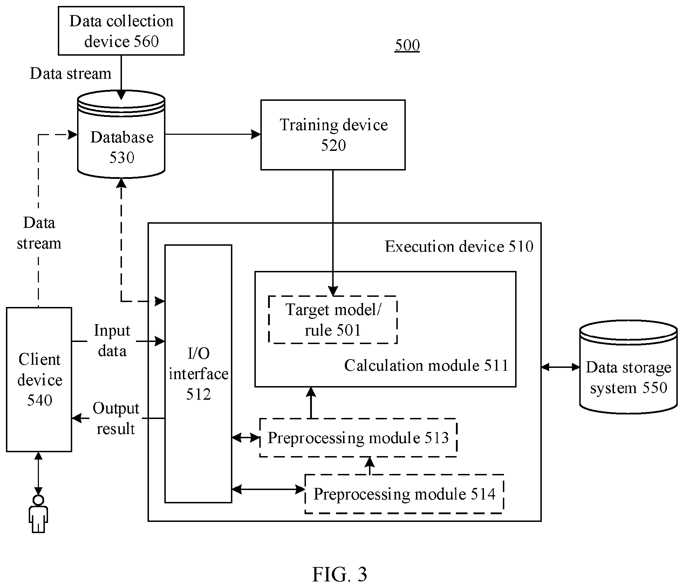

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The following describes in detail a system architecture provided in embodiments of this application with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the foregoing terminal device or server that runs a cross-modal language processing application.

The data collection device 560 is configured to collect a training sample. The training sample may be a plurality of images or the like. After collecting the training sample, the data collection device 560 stores the training sample in the database 530.

The training device 520 may train a to-be-trained neural network (for example, a cross-modal language model (for example, including a text encoder, an image encoder, and a target encoder) in embodiments of this application) based on the training sample maintained in the database 530, to obtain the target model/rule 501.

It should be understood that the training device 520 may perform a pre-training process on the to-be-trained neural network based on the training sample maintained in the database 530, or perform fine tuning on a model based on pre-training.

It should be noted that in actual application, the training sample maintained in the database 530 is not necessarily collected by the data collection device 560, and may be received from another device. In addition, it should be noted that the training device 520 may not train the target model/rule 501 completely based on the training sample maintained in the database 530, and may obtain the training sample from a cloud or another place to perform model training. The foregoing description should not be used as a limitation on embodiments of this application.

The target model/rule 501 obtained by the training device 520 through training may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may enter data (for example, an image in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

In a process in which the execution device 510 preprocesses the input data or the calculation module 511 of the execution device 510 performs related processing like computing, the execution device 510 may invoke data, code, and the like in the data storage system 550 for corresponding processing; and may store, in the data storage system 550, data, instructions, and the like that are obtained through the corresponding processing.

Finally, the I/O interface 512 provides a processing result for the client device 540, to provide the processing result for the user.

In the case shown in FIG. 3, the user may manually give input data, and the "manually given input data" may be operated on an interface provided by the I/O interface 512. In another case, the client device 540 may automatically send input data to the I/O interface 512. If the client device 540 needs to obtain authorization of the user before automatically sending the input data, the user may set corresponding permission in the client device 540. The user may view, on the client device 540, a result output by the execution device 510. A specific presentation form may be a specific manner such as display, sound, or action. The client device 540 may alternatively be used as a data collection end, to collect, as new sample data, input data input to the I/O interface 512 and an output result output from the I/O interface 512 that are shown in the figure, and store the new sample data in the database 530. Certainly, the client device 540 may alternatively not perform collection. Instead, the I/O interface 512 directly stores, in the database 530 as new sample data, the input data input to the I/O interface 512 and the output result output from the I/O interface 512 that are shown in the figure.

It should be noted that FIG. 3 is only a diagram of a system architecture according to an embodiment of this application. A location relationship between a device, a component, a module, and the like shown in the figure does not constitute any limitation. For example, in FIG. 3, the data storage system 550 is an external memory relative to the execution device 510. In another case, the data storage system 550 may be alternatively disposed in the execution device 510. It should be understood that the execution device 510 may be deployed in the client device 540.

Details from a perspective of model inference are as follows:

In this embodiment of this application, the calculation module 511 in the execution device 520 may obtain the code stored in the data storage system 550, to implement steps related to a model inference process in embodiments of this application.

In this embodiment of this application, the calculation module 511 in the execution device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of hardware circuits. For example, the training device 520 may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

Specifically, the calculation module 511 in the execution device 520 may be a hardware system that has an instruction execution function. The steps related to the model inference process provided in embodiments of this application may be software code stored in a memory. The calculation module 511 in the execution device 520 may obtain the software code from the memory, and execute the obtained software code to implement the steps related to the model inference process provided in embodiments of this application.

It should be understood that the calculation module 511 in the execution device 520 may be a combination of a hardware system that does not have an instruction execution function and a hardware system that has an instruction execution function. Some of the steps related to the model inference process provided in embodiments of this application may be implemented by the hardware system that does not have an instruction execution function in the calculation module 511 in the execution device 520. This is not limited herein.

Details from a perspective of model training are as follows:

In this embodiment of this application, the training device 520 may obtain code stored in a memory (which is not shown in FIG. 3, and may be integrated into the training device 520 or separately deployed from the training device 520), to implement steps related to model training in embodiments of this application.

In this embodiment of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of hardware circuits. For example, the training device 520 may be a hardware system that has an instruction execution function, such as a CPU or a DSP, or may be a hardware system that does not have an instruction execution function, such as an ASIC or an FPGA, or may be a combination of the foregoing hardware system that does not have an instruction execution function and the foregoing hardware system that has an instruction execution function.

It should be understood that the training device 520 may be a combination of a hardware system that does not have an instruction execution function and a hardware system that has an instruction execution function. Some of the steps related to model training provided in embodiments of this application may be implemented by the hardware system that does not have an instruction execution function in the training device 520. This is not limited herein.

2. Cross-modal language processing function cloud service provided by a server

In a possible implementation, the server may provide a cross-modal language processing function service for a device side through an application programming interface (application programming interface, API).

A terminal device may send a related parameter (for example, an image) to the server through the API provided by a cloud. The server may obtain a processing result or the like based on the received parameter, and return the processing result to the terminal.

For descriptions about the terminal and the server, refer to the descriptions in the foregoing embodiments. Details are not described herein again.

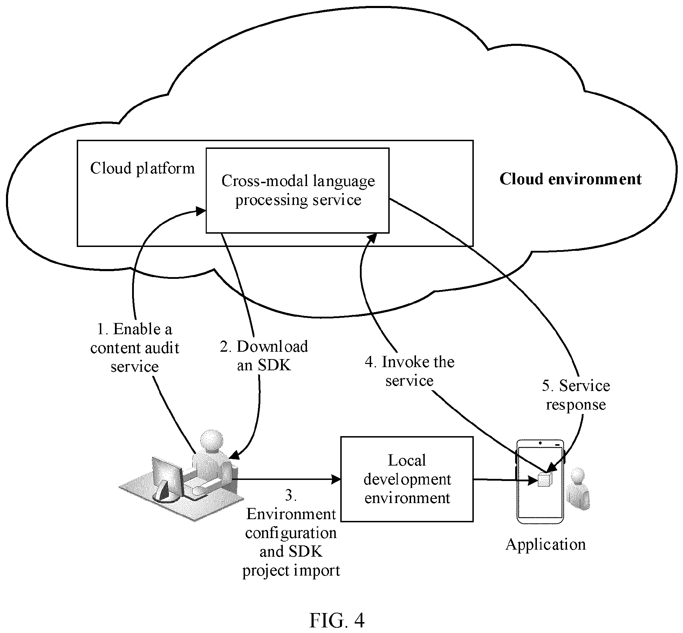

FIG. 4 shows a procedure of using a cross-modal language processing function cloud service provided by a cloud platform.

1. Enable and purchase a content audit service.

2. A user may download a software development kit (software development kit, SDK) corresponding to the content audit service. Generally, the cloud platform provides SDKs of a plurality of development versions for the user to select based on a requirement of a development environment, for example, a Java SDK, a Python SDK, a PHP SDK, and an Android SDK.

3. After locally downloading an SDK of a corresponding version based on the requirement, the user imports an SDK project to a local development environment, and performs configuration and debugging in the local development environment. Another function may be further developed in the local development environment, to form an application that integrates a capability for a cross-modal language processing function.

4. In a process of using the cross-modal language processing function application, when a cross-modal language processing function needs to be performed, API invocation for the cross-modal language processing function may be triggered. When an application triggers the cross-modal language processing function, an API request is initiated to a running instance of a cross-modal language processing function service in a cloud environment, where the API request carries an image, and the running instance in the cloud environment processes the image to obtain a processing result.

5. The cloud environment returns the processing result to the application. In this way, invocation of the cross-modal language processing function service is completed once.

3. Model training cloud service provided by a server

In a possible implementation, the server may pre-train, based on training data (for example, an image) provided by a client, a model having a cross-modal language processing function.

In a possible implementation, the server may provide a model training service for a device side through an application programming interface (application programming interface, API).

A terminal device may send a related parameter to the server through the API provided by a cloud. The server may obtain a processing result based on the received parameter, and return the processing result (for example, the model having the cross-modal language processing function) to the terminal.

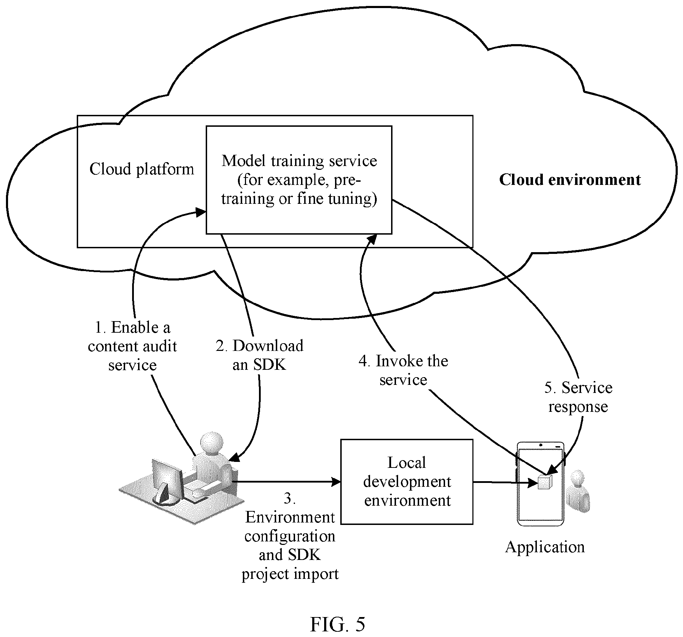

FIG. 5 shows a procedure of using a model training cloud service provided by a cloud platform.

For descriptions about the terminal and the server, refer to the descriptions in the foregoing embodiments. Details are not described herein again.

4. Federated training

Federated learning includes two steps: model delivery and model upload. A central node delivers a model to a terminal device via a network. Each terminal device calculates a gradient of the model based on local data. Each distributed node encrypts the gradient and uploads encrypted gradient to the central node. The central node summarizes gradients from distributed nodes of terminals, and updates a parameter of the model of the central node according to a parameter average algorithm.

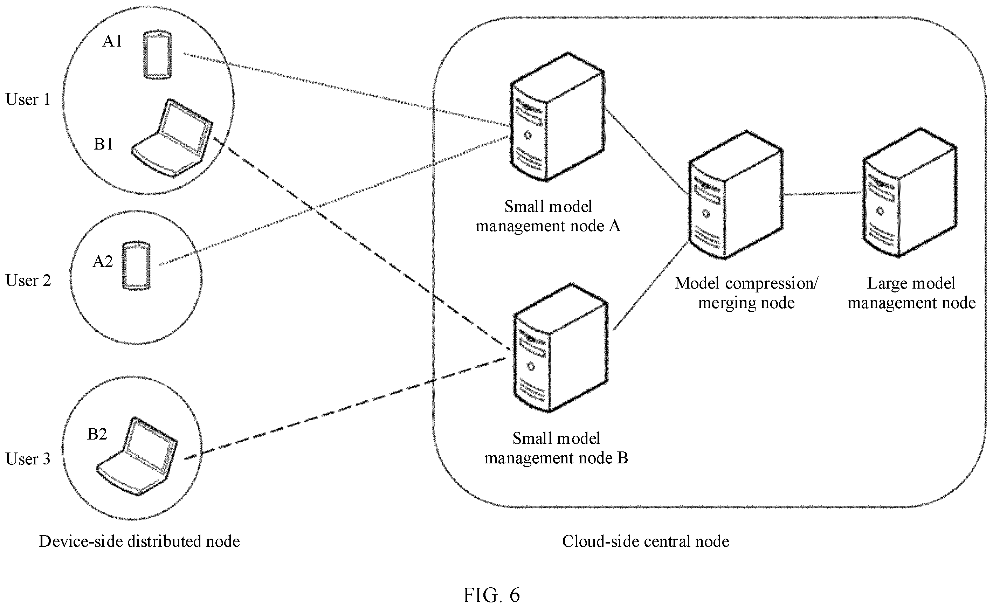

Refer to FIG. 6. FIG. 6 is a diagram of an architecture of a model training method according to an embodiment of this application. As shown in FIG. 6, the architecture provided in this embodiment of this application includes a central node on a cloud side, for example, a server on the cloud side. A1, A2, ... are distributed nodes of a type A, for example, a mobile phone product held by a user. B1, B2, ... are distributed nodes of a type B, for example, a personal computer held by the user. After consent of an administrator (for example, the user of the mobile phone or the computer) of the distributed node, the administrator of the distributed node voluntarily shares data generated in daily usage of the device when privacy is protected, and the data is added to a model training plan. The device becomes a distributed node in the architecture. A system in this embodiment may alternatively include more types of distributed nodes, for example, a smartwatch. To protect data privacy, the distributed node does not upload data to the central node, and only stores data locally. The distributed node is connected to the cloud server via a communication network. The central node on the cloud side can run a large model, but each distributed node can run only a small model due to a limitation of a hardware capability. In addition, A and B can have different data processing capabilities.

Embodiments of this application relate to massive application of a neural network. Therefore, for ease of understanding, the following first describes related terms and related concepts such as the neural network in embodiments of this application.

(1) Neural network

The neural network may include a neuron, and the neuron may be an arithmetic unit that uses $x_s$ (namely, input data) and an intercept 1 as an input. An output of the arithmetic unit may be:

$$h_{W,b}(x) = f(W^T x) = f(\sum\nolimits_{s=1}^{n} W_s x_s + b).$$

s=1, 2, ..., or n, n is a natural number greater than 1, $W_s$ is a weight of $x_s$, and b is a bias of the neuron. f is an activation function (activation functions) of the neuron, and is used to introduce a non-linear feature into the neural network to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Transformer layer

A neural network includes an embedding layer and at least one transformer layer. The at least one transformer layer may be N transformer layers (N is an integer greater than 0), and each transformer layer includes an attention layer, an add & norm (add & norm) layer, a feedforward (feedforward) layer, and an add & norm layer that are adjacent in sequence. At the embedding layer, embedding processing is performed on a current input to obtain a plurality of embedding vectors. At the attention layer, P input vectors are obtained from a previous layer of a first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At a pooling layer, the P intermediate vectors are combined into Q output vectors. A plurality of output vectors obtained at a last transformer layer in the transformer layers are used as a feature representation of the current input.

(3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement for the attention mechanism. The self-attention mechanism becomes less dependent on external information and is better at capturing an internal correlation of data or features. An essential idea of the attention mechanism may be rewritten as the following formula:

Herein, Lx=‖Source‖ represents a length of a source. The formula means that constituent elements in the source are assumed to include a series of data pairs. In this case, an element query in a target (Target) is provided, a similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of the focusing is reflected in calculation of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

(4) Natural language processing (natural language processing, NLP)

A natural language (natural language) is a human language, and natural language processing (NLP) is processing for the human language. Natural language processing is a process of systematic analysis, understanding, and information extraction for text data in an intelligent and efficient manner. Through NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(5) Pre-trained language model (pre-trained language model)

The pre-trained language model is a natural language sequence encoder, and encodes each word in a natural language sequence into a vector representation to perform a prediction task. Training for the pre-trained language model includes two phases. At a pre-training (pre-training) phase, the model is trained for a language model task on a large-scale unsupervised text to learn a word representation. At a fine tuning (fine tuning) phase, the model is initialized by using a parameter learned at the pre-training phase, and is trained in a few steps on a downstream task (downstream task) such as text classification (text classification) or sequence labeling (sequence labeling), so that semantic information obtained through pre-training can be successfully migrated to the downstream task.

(6) Back propagation algorithm

In a training process, a convolutional neural network may correct a value of a parameter in an initial super-resolution model by using an error back propagation (back propagation, BP) algorithm, so that a reconstruction error loss of the super-resolution model becomes increasingly small. Specifically, an input signal is forward transferred until the error loss is generated in an output, and the parameter in the initial super-resolution model is updated through back propagation of information about the error loss, to converge the error loss. The back propagation algorithm is an error-loss-led back propagation motion intended to obtain a parameter such as a weight matrix of an optimal super-resolution model.

(7) Loss function

In a process of training a deep neural network, because it is expected that an output of the deep neural network is maximally close to an actually desired predicted value, a current predicted value of the network may be compared with a target value that is actually desired, and then a weight vector at each layer of the neural network is updated based on a difference between the current predicted value and the target value (certainly, there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually desired or a value close to the target value that is actually desired. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A larger output value (loss) of the loss function indicates a larger difference. Therefore, training of the deep neural network is a process of minimizing the loss.

A text modeling capability in an alignment manner used by an existing cross-modal visual language model (or may be referred to as a multi-modal model or a multi-modal language model) is relatively weak. TIA is used as an example. The TIA only simply determines whether a character is blocked, but does not well consider semantic information between blocked characters. As a result, a model does not really understand content of a document.

A current multi-modal model has a relatively weak text-image alignment capability, that is, does not have a capability of aligning a text element with an image element. Text-image matching (text-image matching, TIM) is used as an example. A training target is used to determine whether a global text matches a global scanned document image. Learning difficulty of this task is low, and consequently a trained model does not have a capability of aligning a text element with an image element.

To resolve the foregoing problem, embodiments of this application provide a data processing method. The following describes the data processing method in embodiments of this application in detail with reference to the accompanying drawings.

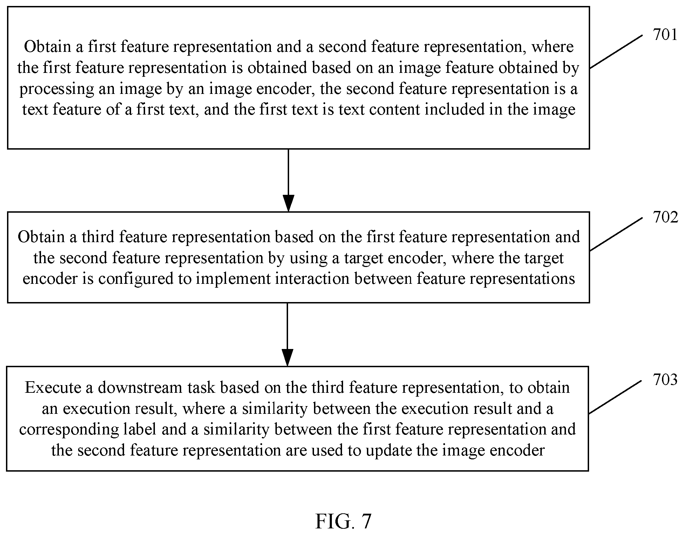

Refer to FIG. 7. FIG. 7 is a schematic flowchart of a data processing method according to an embodiment of this application. As shown in FIG. 7, the data processing method provided in this embodiment of this application may include steps 701 to 703. The following separately describes these steps in detail.

701: Obtain a first feature representation and a second feature representation, where the first feature representation is obtained based on an image feature obtained by processing an image by an image encoder, the second feature representation is a text feature of a first text, and the first text is text content included in the image.

In a possible implementation, an original input image may be obtained, and the original input image is encoded by using the image encoder, to obtain an encoding result of the input image. The encoding result may include an image feature representation of the input image. It should be understood that the original input image in this application may be an image that is input into an expanded-modal language model, or an image obtained by preprocessing an image in an expanded-modal language model.

In a possible implementation, the image encoder may perform feature extraction on the input image. The image encoder may be specifically represented as a convolutional neural network, a histogram of oriented gradient (histogram of oriented gradient, HOG), a local binary pattern (local binary pattern, LBP), another neural network used to perform feature extraction on the image, or the like.

In a possible implementation, the input image may be processed by using the image encoder, to obtain the image feature representation corresponding to the input image.

In a possible implementation, a text included in the image may be recognized. For example, the text included in the image may be recognized through optical character recognition (optical character recognition, OCR). Optionally, position information corresponding to each text unit in the text may be further recognized. The position information may indicate a position, in the image, of a region in which the text unit is located. For example, the region in which the text unit is located may be represented by using a rectangular box, and the position information may be coordinates of an upper left point and coordinates of a lower right point of the rectangular box.

In a possible implementation, a text feature representation corresponding to the text may be obtained.

In a possible implementation, embedding processing may be performed on the text by using an embedding layer, to obtain an embedding vector. The embedding vector may be the text feature representation corresponding to the text.

The embedding layer may be referred to as an input embedding (input embedding) layer. A current input may be each text unit in the text. After obtaining the current input, the embedding layer may perform embedding processing on each text unit in the current input, to obtain an embedding vector corresponding to each text unit.

In some embodiments, a position vector of each text unit may be further obtained. The position vector indicates a position of the text unit. The position indicates a position of the text unit in the text. Specifically, the position indicates a relative position relationship between the text unit and another text unit in the text.

In an implementation, the embedding layer may include an input embedding layer and a positional encoding (positional encoding) layer. At the input embedding layer, word embedding processing may be performed on each text unit in the current input, to obtain the embedding vector of each text unit. At the positional encoding layer, a position of each text unit in the current input may be obtained, and then a position vector is generated for the position of each text unit.

In some examples, the position of each text unit in the text may be an absolute position of each text unit in the text. For example, the current input is "what date should the Huabei debt be repaid", where a position of "what" may be represented as a first place, a position of "date" may be represented as a second place.... In some examples, the position of each text unit in the text may be a relative position of each text unit in the text. Still in the example in which the current input is "what date should the Huabei debt be repaid", the position of "what" may be represented as before "date", the position of "date" may be represented as after "what" and before "should".... When the embedding vector and the position vector of each text unit in the current input are obtained, the position vector of each text unit and the corresponding embedding vector may be fused to obtain an embedding vector of each text unit. In other words, a plurality of embedding vectors corresponding to the current input are obtained. It should be understood that a fusion manner may be performing an addition operation on the embedding vector and the position vector, or another operation is performed to enable the embedding vector to carry information about a text unit in the text and a position of the text unit in the text. A specific fusion manner is not limited herein. For example, the fusion manner includes but is not limited to concatenate (conact), add (add), fusion (fusion), multiplication, and the like.

In a possible implementation, embedding processing may be performed on the text by using an embedding layer, to obtain an embedding vector, and the embedding vector is processed by using a text encoder, to obtain a text feature representation corresponding to the text.

In this embodiment of this application, a capability of matching between a text and an image is enhanced through text-image contrastive learning (text-image contrastive learning, TIC), that is, an information processing capability of a model for cross-modal data such as image information and text information is improved. Specifically, for the image feature of the image and a text feature of the text, the image encoder is updated by using a loss constructed through similarity contrast (if the text feature is obtained by using the text encoder, the text encoder may also be updated). Although the image feature of the image and the text feature of the text in the image are not same-modal features, because the text is a text in the image, and the image feature also contains semantic information of the text, the image feature and the text feature (belonging to the same image) are associated in a semantic dimension (or another information dimension). The foregoing similarity may include a similarity between semantic information in the image and semantic information of the text. Therefore, the image encoder and the text encoder (if the text encoder exists in the architecture) are updated based on a loss constructed based on the similarity, so that features extracted by the image encoder and the text encoder can contain more accurate semantic information of the text in the image, thereby enhancing a text-image matching capability of a subsequent network.

In addition, in an architecture of a cross-modal language model, the image encoder, the text encoder, and a target encoder configured to provide interaction information between features are included. In this application, the image encoder and the text encoder are updated based on a loss constructed based on a similarity between intermediate outputs (that is, outputs of the image encoder and the text encoder) of the model, so that a downstream task can be implemented based on feature representations output by the image encoder and the text encoder (where precision is not higher than that of a downstream task executed based on a feature representation output by the target encoder). In some scenarios, because an amount of data to be processed in the downstream task is relatively large, coarse sorting may be performed by using the feature representations output by the image encoder and the text encoder, and fine sorting may be performed by using the feature representation output by the target encoder, to improve a recall rate.

An example in which the image and the first text are objects for which text-image contrastive learning (that is, text-image alignment) needs to be performed is used for description.

In a possible implementation, the image may be an original input image (or may be a partial image of an original input image, but the partial image includes all texts of the input image). The first text may be all texts included in the image.

In a possible implementation, the image may be an original input image (or may be a partial image of an original input image, but the partial image includes all texts of the input image). The first text may be a part of texts included in the image.

In a possible implementation, the image may be a partial image region obtained by extracting the original input image, the partial image region includes a part of texts in all texts in the original input image, and the first text may be all the texts included in the image.

In a possible implementation, the image may be a partial image region obtained by extracting the original input image, the partial image region includes a part of texts in all texts in the original input image, and the first text may be a part of texts included in the image.

In a possible implementation, the input original image may include one or more rows of texts, or the input original image may include one or more columns of texts. Optionally, the image may include one row or one column of text of the original image, and the first text may be one or more text units.

During text-image contrastive learning, a loss used to update the image encoder and the text encoder may be constructed based on a similarity between the image feature of the image and the text feature of the first text. Optionally, the similarity is related to a similarity between text semantic information contained in the image and semantic information of the text.

It should be understood that the loss used to update the image encoder and the text encoder may be further constructed based on a similarity between the image feature of the image and a text feature of a text that is not included in the image. A difference lies in that the image feature of the image and the text feature of the text in the image are a positive example (that is, a corresponding label has a high similarity), and the image feature of the image and the text feature of the text that is not included in the image are a negative example (that is, a corresponding label has a low similarity).

In a possible implementation, the similarity may be a similarity between the text feature and the image feature, or may be a similarity between the image feature and the text feature.

In a possible implementation, for a same original input image, an image feature corresponding to the entire input image may be contrasted with text features of all texts included in the input image, or an image feature of a partial image region in the input image may be contrasted with text features of a part of texts included in the input image, or an image feature corresponding to the entire input image may be contrasted with text features of a part of texts included in the input image, or a combination of the foregoing manners may be used.

In a possible implementation, for a same original input image, text features corresponding to all texts included in the input image may be contrasted with an image feature of a partial image region in the input image, or text features of a part of texts included in the input image may be contrasted with an image feature of a partial image region in the input image, or text features corresponding to all texts included in the input image may be contrasted with an image feature corresponding to the entire input image.

In a possible implementation, for different original input images, text features corresponding to all texts included in a part of input images may be contrasted with an image feature of a partial image region in the input image, or text features of a part of texts included in a part of input images may be contrasted with an image feature of a partial image region in the input image, or text features corresponding to all texts included in a part of input images may be contrasted with an image feature corresponding to the entire input image, or a combination of the foregoing manners may be used.

In a possible implementation, for different original input images, text features corresponding to all texts included in a part of input images may be contrasted with an image feature of a partial image region in the input image, or text features of a part of texts included in a part of input images may be contrasted with an image feature of a partial image region in the input image, or text features corresponding to all texts included in a part of input images may be contrasted with an image feature corresponding to the entire input image.

In a possible implementation, the image feature of the partial image region in the image may be determined by using an image region feature extraction module (which, for example, may be implemented by a region of interest (region of interest, ROI) head) based on the image feature obtained by the image encoder. For example, the image region feature extraction module may perform, based on position information of an image region to be extracted, bilinear interpolation on an image feature (output by the image encoder) of the image region, to obtain the image feature of the partial image region.

In the foregoing manner, through contrastive learning for a coarse granularity and a fine granularity, a capability of overall text-image matching and a capability of region-text line matching can be enhanced, and performance of a model in a downstream task such as an information extraction task can be improved.

For example, when text-image contrastive learning is constructed, a loss function of image-text contrastive learning may be defined as:

$$\mathrm{L}_k^i(x_k^i, \{x_j^t\}_{j=1}^b) = -\frac{1}{b}\log\frac{\exp(s_{k,k}^i)}{\sum_{j=1}^b \exp(s_{k,j}^i)}.$$

$s_{k,j}^i$ represents a similarity between a $k^{\text{th}}$ image and a $j^{\text{th}}$ text.

For example, a loss function of text-image contrastive learning may be defined as:

$$\mathrm{L}_k^t(x_k^t, \{x_j^i\}_{j=1}^b) = -\frac{1}{b}\log\frac{\exp(s_{k,k}^t)}{\sum_{j=1}^b \exp(s_{k,j}^t)}.$$

$s_{k,j}^i$ represents a similarity between a $k^{\text{th}}$ text and a $j^{\text{th}}$ image.

For example, a loss function of overall text line-image region contrastive learning may be defined as:

$$\mathrm{L}_{\text{trc}} = \frac{1}{2}\sum_{k=1}^b \left(\mathrm{L}_k^i + \mathrm{L}_k^t\right).$$

To establish a fine-grained similarity matrix, bidirectional similarities between an image and a text line region may be respectively expressed as:

$$s_{k,j}^i = \frac{1}{T}\sum_{p=1}^T v_{k,i}^{\mathrm{T}} t_{j,m_p}, \quad s_{k,j}^t = \frac{1}{T}\sum_{q=1}^T v_{k,i}^{\mathrm{T}} t_{j,m_q}.$$

$$m_p = \arg\max_r \; \dot{v}_{k,p} \; t_{j,r} \text{, and } \quad m_q = \arg\max_r \; \dot{v}_{k,q} \; t_{j,r}.$$

The following describes an application embodiment of text-image contrastive learning (text-image contrastive learning, TIC).

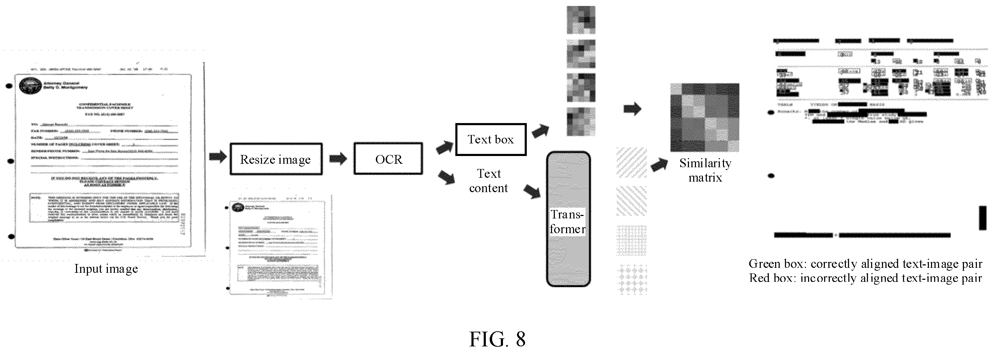

Refer to FIG. 8. The embodiment may be divided into the following steps:

(1) Scale an image to a specific resolution (for example, 448x448).
(2) Obtain text line content and a position (bounding box) of a document by using an OCR tool.
(3) Extract a visual representation of a text line by using MaskRCNN.
(4) Extract a text representation of the text line of the document by using Roberta.
(5) Construct a vision-text matching matrix, and select a most matched text (vision) token corresponding to vision (text).
(6) Optimize a text-image contrastive learning TIC loss.

702: Obtain a third feature representation based on the first feature representation and the second feature representation by using a target encoder, where the target encoder is configured to implement interaction between feature representations.

In this application, a multi-modal alignment capability can be first improved in a dual-tower manner, and then a multi-modal single-tower structure is used to further enhance an interactive learning capability for a feature. This can facilitate a downstream task such as efficient document retrieval (coarse sorting first and then fine sorting).

In a possible implementation, the third feature representation may be obtained based on the first feature representation and the second feature representation by using the target encoder. The third feature representation may include the text feature corresponding to the first text and the image feature corresponding to the image. Different from the first feature representation and the second feature representation, a feature output by the target encoder is obtained through interactive learning between the first feature representation and the second feature representation.

703: Execute a downstream task based on the third feature representation, to obtain an execution result, where a similarity between the execution result and a corresponding label and a similarity between the first feature representation and the second feature representation are used to update the image encoder.

In a possible implementation, the target encoder may obtain the third feature representation, the third feature representation may be used to execute the downstream task to obtain the execution result, and a loss may be constructed based on the execution result and the corresponding label to update the image encoder, the text encoder (if any), and the target encoder.

In a possible implementation, different losses may be constructed by setting different downstream tasks.

In a possible implementation, the downstream task may include bounding-box grid matching (bounding-box grid matching, BGM).

In a possible implementation, the first text may include a first sub-text and a second sub-text, the second feature representation includes a first sub-feature corresponding to the first sub-text and a second sub-feature corresponding to the second sub-text, the first sub-feature does not include a position of the first sub-text in the image, and the second sub-feature includes a position of the second sub-text in the image. In other words, when the text feature of the first text is generated, for a part of texts (for example, the second sub-text) in the first text, a corresponding text feature (for example, the second sub-feature) may be generated based on the text and position information, and for a part of texts (for example, the first sub-text) in the first text, a corresponding text feature (for example, the first sub-feature) may be generated based on the text and position information. This is equivalent to that the first sub-feature does not include the position of the first sub-text in the image and the second sub-feature includes the position of the second sub-text in the image.

In a possible implementation, a text included in the image and corresponding position information may be recognized through optical character recognition (optical character recognition, OCR). The position information may indicate a position, in the image, of a region in which the text is located. For example, the region in which the text is located may be represented by using a rectangular box, and the position information may be coordinates of an upper left point and coordinates of a lower right point of the rectangular box.

Further, the third feature representation may include position information of the second sub-text, but does not include position information of the first sub-text (herein, "does not include" may be understood as being caused due to an input, but may be "implicitly include"), which may be obtained through prediction based on the third feature representation. Specifically, a first position of the first sub-text in the image may be predicted based on the third feature representation, where a similarity between the first position and a corresponding label (that is, a real position of the first sub-text in the image) is used to update the image encoder and the target encoder.

In a possible implementation, the image includes a plurality of image blocks, the first position is an image block in which the first sub-text is predicted to be located, and the label is an image block in which the first sub-text is actually located.

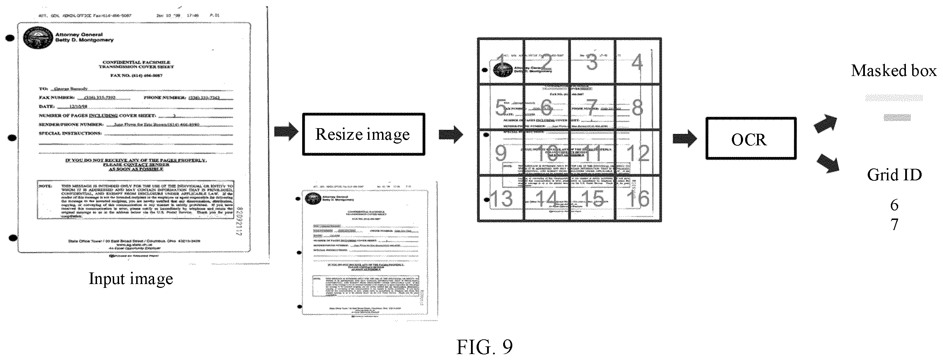

For example, refer to FIG. 9. This embodiment may be divided into the following steps:

(1) Scale an image to a specific resolution (for example, 448x448).
(2) Divide an image region into several regions (for example, 4x4 grids).
(3) Obtain bounding box (bounding box) coordinates of each text through OCR.
(4) Randomly select a specific proportion of text lines that do not include mask language modeling (mask language modeling, MLM) (if the downstream task includes MLM), and cover bounding box coordinates of each text in the text line (for example, the bounding box coordinates may be set to [0, 0, 0, 0]).
(5) Determine a region, in the image, in which the text whose position information is covered is located.

A feature of each word may be represented as an aggregation of multi-modal features, for example:

$$E_i = E_{word}(t_i) + E_{layout}(t_i)$$

$E_{word}$ and $E_{layout}$ respectively represent word embedding and layout information of an $i^{th}$ word.

The layout information of the $i^{th}$ word is covered, and then a category of a spatial partition of the word in the original image is predicted. In this case, a loss function of BGM may be defined as:

$$L_{BGM} = \sum_i \sum_j (-y_{ij} \log(p_{ij})).$$

$y_{ij}$ represents a real label of the $i^{th}$ word, and $p_{ij}$ represents a probability that the $i^{th}$ word belongs to a $j^{th}$ image region.

In this application, BGM is proposed in a single-tower part to improve a spatial layout sensing capability, thereby helping improve performance of a model in a position-sensitive task. For example, in information extraction, a key-value pair is usually adjacent paired data. Because the model has learned a capability of sensing position and layout information in a pre-training phase, the model has good performance in an information extraction task.

In addition, the downstream task may further include MLM. Specifically, in a feedforward process of model training, a text unit in a text may be masked (for example, may be randomly masked), a masked text unit may be used as a prediction text, and an unmasked text unit may be used as a known text. The model may sequentially perform text prediction on a text position of the masked text unit based on the unmasked text unit (or a predicted masked text unit). For example, the text may be "the cat sat on the mat", and after the text is masked, "the _ sat _ the mat" may be obtained, where the symbol "_" herein means a mask instead of an underline. During first prediction, a text in a text position in which one "_" is located may be predicted by using an initial flag bit and the unmasked text unit.

In a possible implementation, to improve an image representation learning capability, a loss may be further constructed based on an image feature. Specifically, a part of an image may be masked, image reconstruction is performed on an image in a masked region by using a result obtained by the image encoder, and a network is updated based on a difference between a reconstruction result and a pixel value of a real image in the masked region. However, an existing method has a relatively weak image representation learning capability. Specifically, to reduce processing example overheads of a model, an image needs to be compressed to a relatively low resolution (for example, 224x224). When the image includes an intensive text, it is difficult for a pixel in the image to express accurate text information, and an image representation learning capability of a trained model is limited.

In this embodiment of this application, to improve the image representation learning capability, the image feature of the image instead of the image may be masked, feature reconstruction is performed on an image feature of the masked region, and the network is updated based on a difference between a reconstruction result and the image feature of the masked region. Compared with a pixel value, the image feature can carry richer image information and text information. Therefore, an image representation learning capability of a trained network can be improved. The foregoing manner may be referred to as mask image modeling (mask image modeling, MIM).

In a possible implementation, the first feature representation includes a third sub-feature and a fourth sub-feature; based on the fourth sub-feature, a second position of the fourth sub-feature in the first feature representation, and a third position of the third sub-feature in the first feature representation, a predicted feature value at the third position may be obtained; and a similarity between the predicted feature value and the third sub-feature is used to update the image encoder.

In a possible implementation, a fourth feature representation may be obtained by using a self-attention network based on the fourth sub-feature, the second position of the fourth sub-feature in the first feature representation, and the third position of the third sub-feature in the first feature representation; and a predicted feature value at the third position is obtained based on the fourth feature representation by using a prediction network.

It should be understood that an object (the first feature representation) that is masked may be obtained by the image encoder, or may be obtained by performing specific processing on the image feature obtained by the image encoder, for example, may be an image feature determined by an image region feature extraction module (which, for example, may be implemented by a region of interest (region of interest, ROI) head) for a partial image region in the image.

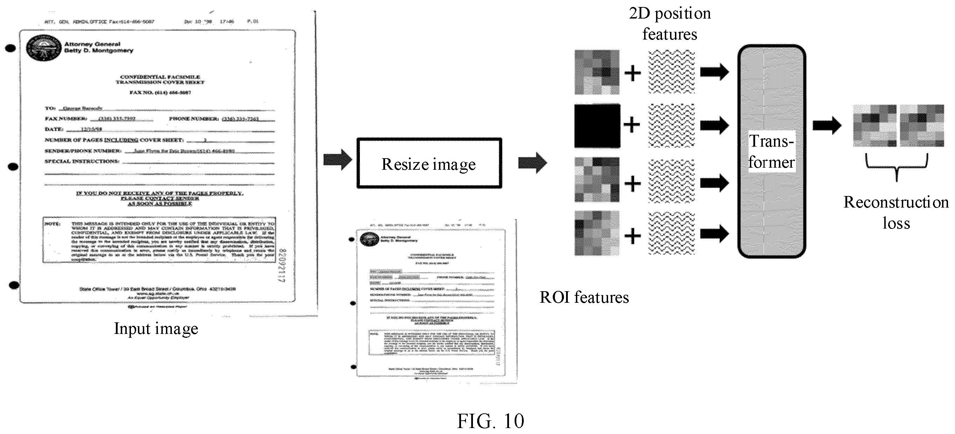

For example, refer to FIG. 10. This embodiment may be divided into the following steps:

(1) Scale an image to a specific resolution (for example, 448x448).
(2) Calculate a convolutional feature map of the current image.
(3) Calculate a visual feature (ROI features) of each bounding box region.
(4) Randomly select a specific proportion of text lines that do not include MLM (if the downstream task includes MLM), and cover a region corresponding to the text line in the feature map of a convolutional network.
(5) Enter all ROI features (including a covered ROI feature) to self-attention.
(6) Reconstruct the covered ROI feature by using a loss such as contrastive/L1.

To enhance representation learning for an image branch, a visual feature of each text line is first extracted through ROI alignment.

$$ f_i = W f_{ROI}^i + b . $$

$f_{ROI}^i$ represents an ROI visual feature of an i$^{th}$ text line, and W and *b* are network parameters.

Optionally, a new aggregate representation of the visual feature of each text line may be recalculated by using an attention mechanism:

$$ \mathrm{H} = Atten(f; \phi) = Atten(\{fi\}; \phi) . $$

H is a hidden space representation of the ROI feature, *Atten* is a self-attention module, and $\phi$ is a network parameter.

A reconstruction loss function of a visual mask feature of a text line region in the image may be expressed as:

$$ \mathrm{L_{ROI}} = \sum_i \mathrm{smooth}_{L1}(H_i - H_i^{ROI_{mask}}) . $$

$H_i^{ROI_{mask}}$ represents a visual reconstruction feature of an i$^{th}$ covered bounding box, and $H_i$ represents ground truth labels corresponding to $H_i^{ROI_{mask}}$ .

In this embodiment, a higher resolution is used together with MIM (Masked Image Modeling) to improve visual representation learning for a text line region. A covered visual feature map is reconstructed from a perspective of a feature map, and an ROI feature of an adjacent unmasked text line is used to help reconstruct a visual feature of a masked text line. The visual representation learning capability is enhanced, so that multi-modal feature alignment can be further improved, and performance of the model in some downstream tasks such as text-image classification can be improved.

The following describes beneficial effects of this application with reference to an experiment result.

As shown in Table 1, this application surpasses SOTA with respect to performance in public datasets such as information extraction datasets (FUNSD, CORD, and SROI) and text-image classification datasets (such as RVL-CDIP).

Table 1

| Method | Model | Information extraction (F1) | | | Document classification (Acc) |
|---|---|---|---|---|---|
| | | FUNSD | CORD | SROIE | RVL-CDIP |
| Language model (OCR+NLP) | BERT | 0.60 | 0.89 | 0.91 | 89.9% |
| | RoBERTa | 0.71 | 0.93 | - | 90.1% |
| | UniLMv2 | 0.66 | 0.91 | 0.94 | 90.2% |
| Multi-modal model (OCR+multi-modal) | StructuralLM | 0.85 | - | - | - |
| | SelfDoc | 0.83 | - | - | 93.8% |
| | DocFormer | 0.83 | 0.96 | - | - |
| | LayoutLM | 0.79 | 0.94 | 0.94 | 94.4% |
| | LayoutLMv2 | 0.83 | 0.95 | 0.96 | 95.6% |
| | LayoutLMv3 | 0.90 | 0.96 | - | - |
| | Ernie-layout | 0.9312 | 0.97 | 0.97 | 95.4% |
| | Ours | 0.9339 | 0.97 | 0.97 | 95.7% |

This application provides a data processing method, including: obtaining a first feature representation and a second feature representation, where the first feature representation is obtained based on an image feature obtained by processing an image by an image encoder, the second feature representation is a text feature of a first text, the first text is text content included in the image, and a similarity between the first feature representation and the second feature representation is used to update the image encoder; obtaining a third feature representation based on the first feature representation and the second feature representation by using a target encoder, where the target encoder is configured to implement interaction between feature representations; and executing a downstream task based on the third feature representation, to obtain an execution result.

In embodiments of this application, a capability of matching between a text and an image is enhanced through text-image contrastive learning (text-image contrastive learning, TIC). Specifically, for the image feature of the image and a text feature of a text, the image encoder is updated by using a loss constructed through similarity contrast (if the text feature is obtained by using a text encoder, the text encoder may also be updated). Although the image feature of the image and the text feature of the text in the image are not same-modal features, because the text is a text in the image, and the image feature also contains semantic information of the text, the image feature and the text feature (belonging to the same image) are associated in a semantic dimension (or another information dimension). The foregoing similarity may include a similarity between semantic information in the image and semantic information of the text. Therefore, the image encoder and the text encoder (if the text encoder exists in the architecture) are updated based on a loss constructed based on the similarity, so that features extracted by the image encoder and the text encoder can contain more accurate semantic information of the text in the image, thereby enhancing a text-image matching capability of a subsequent network.

In addition, in an architecture of a cross-modal language model, the image encoder, the text encoder, and a target encoder configured to provide interaction information between features are included. In this application, the image encoder and the text encoder are updated based on a loss constructed based on a similarity between intermediate outputs (that is, outputs of the image encoder and the text encoder) of the model, so that a downstream task can be implemented based on feature representations output by the image encoder and the text encoder (where precision is not higher than that of a downstream task executed based on a feature representation output by the target encoder). In some scenarios, because an amount of data to be processed in the downstream task is relatively large, coarse sorting may be performed by using the feature representations output by the image encoder and the text encoder, and fine sorting may be performed by using the feature representation output by the target encoder, to improve a recall rate.

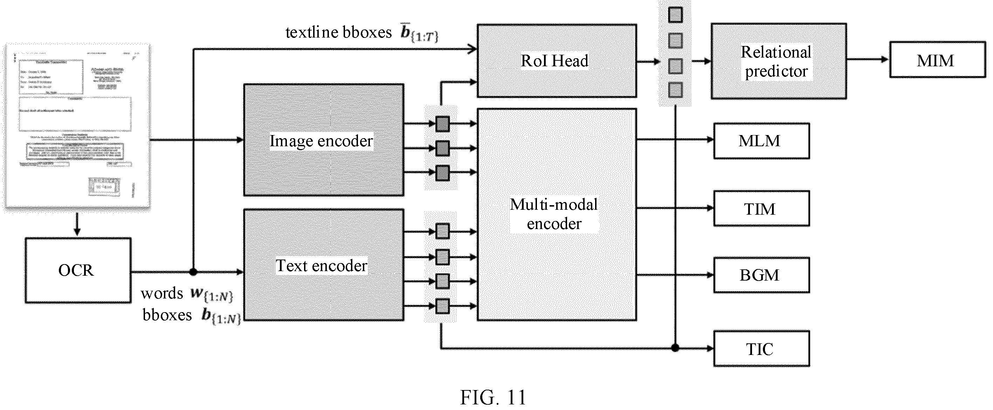

Refer to FIG. 11. FIG. 11 is a diagram of an architecture of a model according to this application. Text and image features are first aligned through dual-tower, and then a text-image multi-modal interaction module is constructed through single-tower. In a dual-tower part, an image and a text are first separately encoded to extract features, and then a capability of overall text-image matching and a capability of region-text line matching are enhanced through contrastive learning for a coarse granularity and a fine granularity. In a single-tower part, BGM (Box Grid Matching) is proposed to improve a spatial layout sensing capability. To improve a modeling capability of the model for visual representation, a higher resolution is used together with MIM (Masked Image Modeling) in a visual branch to improve visual representation learning for a text line region.

In addition, this application further provides a data processing method. The method includes:

obtaining an image;

processing the image by using an image encoder, to obtain a first feature representation;

processing, by using a text encoder, a text included in the image, to obtain a second feature representation;

obtaining a third feature representation based on the first feature representation and the second feature representation by using a target encoder, where the target encoder is configured to implement interaction between feature representations; and

executing a downstream task based on the third feature representation, to obtain an execution result.

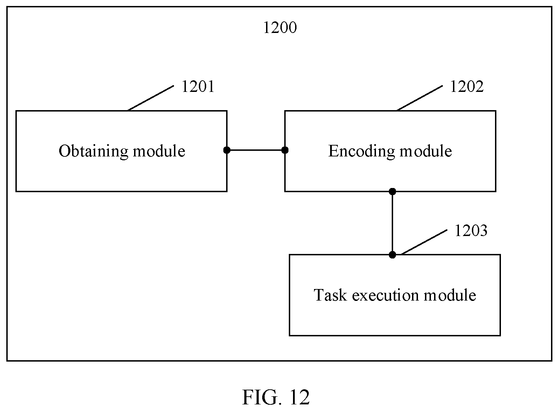

Refer to FIG. 12. FIG. 12 is a diagram of a structure of a data processing apparatus according to an embodiment of this application. As shown in FIG. 12, the data processing apparatus 1200 provided in this embodiment of this application includes the following.

An obtaining module 1201 is configured to obtain a first feature representation and a second feature representation, where the first feature representation is obtained based on an image feature obtained by processing an image by an image encoder, the second feature representation is a text feature of a first text, and the first text is text content included in the image.

For specific descriptions of the obtaining module 1201, refer to the descriptions of step 701 in the foregoing embodiments. Details are not described herein again.

An encoding module 1202 is configured to obtain a third feature representation based on the first feature representation and the second feature representation by using a target encoder, where the target encoder is configured to implement interaction between feature representations.

For specific descriptions of the encoding module 1202, refer to the descriptions of step 702 in the foregoing embodiments. Details are not described herein again.

A task execution module 1203 is configured to execute a downstream task based on the third feature representation, to obtain an execution result, where a similarity between the execution result and a corresponding label and a similarity between the first feature representation and the second feature representation are used to update the image encoder.

For specific descriptions of the task execution module 1203, refer to the descriptions of step 703 in the foregoing embodiments. Details are not described herein again.

In a possible implementation, the second feature representation is a text feature obtained by processing the first text by a text encoder, and the similarity between the first feature representation and the second feature representation is further used to update the text encoder.

In a possible implementation, the similarity between the first feature representation and the second feature representation is related to a similarity between text semantic information contained in the image and semantic information of a text.

In a possible implementation,

the first text is all texts included in the image; or
the first text is a part of all texts included in the image.

In a possible implementation,

the image is a partial image region extracted from an original input image, and a text included in the image is a part of a text included in the input image; or
the image is an original input image.

In a possible implementation, the first text includes a first sub-text and a second sub-text, the second feature representation includes a first sub-feature corresponding to the first sub-text and a second sub-feature corresponding to the second sub-text, the first sub-feature does not include a position of the first sub-text in the image, and the second sub-feature includes a position of the second sub-text in the image; and

the task execution module is specifically configured to:

predict a first position of the first sub-text in the image based on the third feature representation, where a similarity between the first position and a corresponding label is used to update the image encoder and the target encoder.

In a possible implementation, the image includes a plurality of image blocks, the first position is an image block in which the first sub-text is predicted to be located, and the label is an image block in which the first sub-text is actually located.

In a possible implementation, the first feature representation includes a third sub-feature and a fourth sub-feature, and the method further includes:

a prediction module, configured to obtain, based on the fourth sub-feature, a second position of the fourth sub-feature in the first feature representation, and a third position of the third sub-feature in the first feature representation, a predicted feature value at the third position, where a similarity between the predicted feature value and the third sub-feature is used to update the image encoder.

In a possible implementation, the prediction module is specifically configured to:

obtain a fourth feature representation by using a self-attention network based on the fourth sub-feature, the second position of the fourth sub-feature in the first feature representation, and the third position of the third sub-feature in the first feature representation; and

obtain the predicted feature value at the third position based on the fourth feature representation by using a prediction network.

In addition, this application further provides a data processing apparatus. The apparatus includes:

an obtaining module, configured to obtain an image;

an encoding module, configured to: process the image by using an image encoder, to obtain a first feature representation;

process, by using a text encoder, a text included in the image, to obtain a second feature representation; and

obtain a third feature representation based on the first feature representation and the second feature representation by using a target encoder, where the target encoder is configured to implement interaction between feature representations; and

a task execution module, configured to execute a downstream task based on the third feature representation, to obtain an execution result.

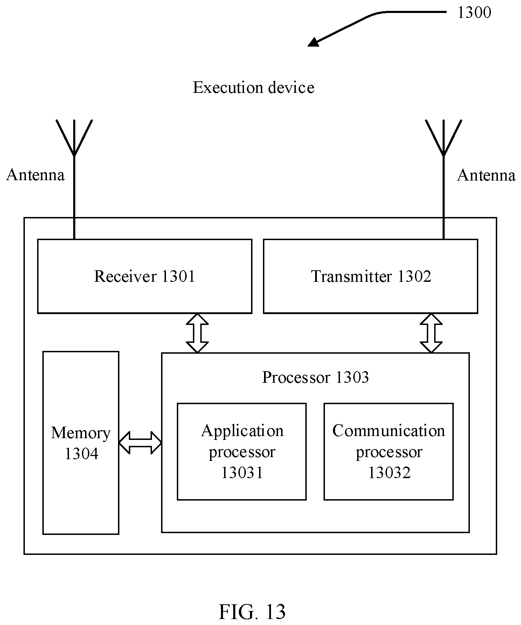

The following describes an execution device provided in embodiments of this application. Refer to FIG. 13. FIG. 13 is a diagram of a structure of an execution device according to an embodiment of this application. The execution device 1300 may be specifically represented as a virtual reality VR device, a mobile phone, a tablet, a notebook computer, an intelligent wearable device, a monitoring data processing device, a server, or the like. This is not limited herein. Specifically, the execution device 1300 includes: a receiver 1301, a transmitter 1302, a processor 1303, and a memory 1304 (there may be one or more processors 1303 in the execution device 1300, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores operation instructions of the processor, an executable module or a data structure, a subset thereof, or an extended set thereof. The operation instructions may include various operation instructions used to implement various operations.

The processor 1303 controls an operation of the execution device. In specific application, components of the training device are coupled together through a bus system. In addition to a data bus, the bus system may further include a power bus, a control bus, a status signal bus, and the like. However, for clear description, various buses are referred to as the bus system in the figure.

The method disclosed in embodiments of this application may be applied to the processor 1303, or implemented by the processor 1303. The processor 1303 may be an integrated circuit chip and has a signal processing capability. In an implementation process, steps of the foregoing method may be completed by using an integrated logic circuit of hardware in the processor 1303 or instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1303 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1304. The processor 1303 reads information in the memory 1304, and completes the steps related a model inference process in the foregoing methods in combination with hardware of the processor 1303.

The receiver 1301 may be configured to: receive input digit or character information, and generate a signal input related to a related setting and function control of the execution device. The transmitter 1302 may be configured to output digit or character information through a first interface. The transmitter 1302 may be further configured to send instructions to a disk group through the first interface, to modify data in the disk group. The transmitter 1302 may further include a display device like a display.

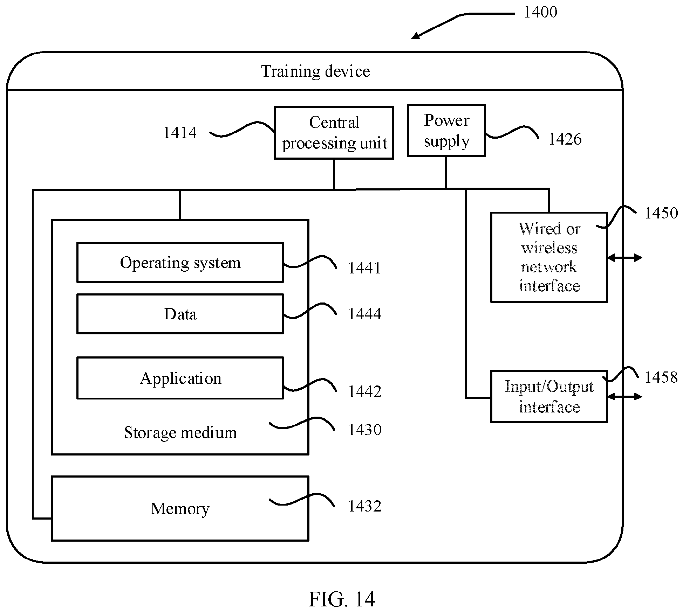

An embodiment of this application further provides a training device. Refer to FIG. 14. FIG. 14 is a diagram of a structure of a training device according to an embodiment of this application. Specifically, the training device 1400 is implemented by one or more servers, the training device 1400 may vary greatly with configuration or performance, and may include one or more central processing units (central processing units, CPU) 1414 (for example, one or more processors), a memory 1432, and one or more storage media 1430 (for example, one or more mass storage devices) that store an application 1442 or data 1444. The memory 1432 and the storage medium 1430 may be transitory storage or persistent storage. The program stored in the storage medium 1430 may include one or more modules (not shown in the figure), and each module may include a series of instruction operations for a training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441, such as Windows ServerTM, Mac OS XTM, UnixTM, LinuxTM, and FreeBSDTM.

In this embodiment of this application, the central processing unit 1414 is configured to perform an action related to model training in the foregoing embodiments.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program is run on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

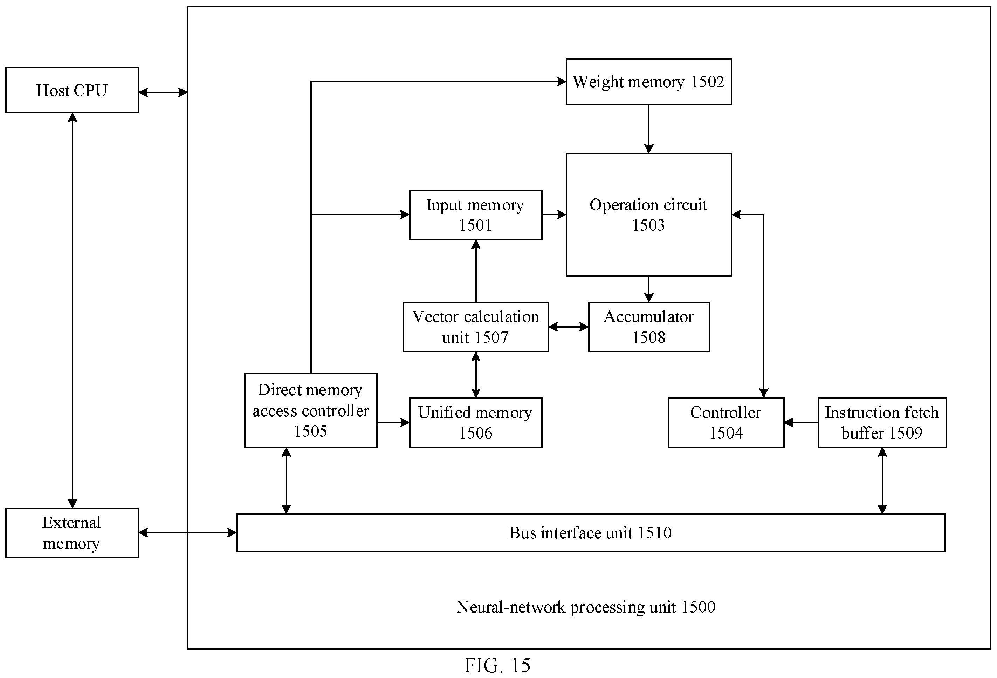

Specifically, refer to FIG. 15. FIG. 15 is a diagram of a structure of a chip according to an embodiment of this application. The chip may be represented as a neural-network processing unit NPU 1500. The NPU 1500 is mounted to a host CPU (Host CPU) as a coprocessor, and the host CPU allocates a task. A core part of the NPU is an operation circuit 1503. The operation circuit 1503 is controlled by a controller 1504 to extract matrix data in a memory and perform a multiplication operation.

In some implementations, the operation circuit 1503 includes a plurality of processing units (Process Engine, PE). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501, performs a matrix operation on the data of the matrix A and the matrix B, to obtain a partial result or a final result of the matrix, and stores the result in an accumulator (accumulator) 1508.

A unified memory 1506 is configured to store input data and output data. Weight data is directly transferred to the weight memory 1502 by using a direct memory access controller DMAC (Direct Memory Access Controller, DMAC) 1505. The input data is also transferred to the unified memory 1506 by using the DMAC.

A BIU is a bus interface unit, namely, a bus interface unit 1510, and is used for interaction between an AXI bus and each of the DMAC and an instruction fetch buffer (Instruction Fetch Buffer, IFB) 1509.

The bus interface unit (Bus Interface Unit, BIU for short) 1510 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. When necessary, further processing is performed on an output of the operation circuit 1503, such as vector multiplication, vector addition, an exponential operation, a logarithmic operation, and size comparison. The vector calculation unit is mainly configured to perform network calculation at a non-convolutional/fully connected layer in a neural network, for example, batch normalization (batch normalization), pixel-level summation, and upsampling on a feature map.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a feature map extracted at a convolutional layer, and for another example, accumulate vectors of values to generate an activation value. In some implementations, the vector calculation unit 1507 generates a normalized value, a pixel-level sum, or both. In some implementations, the processed output vector can be used as an activation input of the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

The processor mentioned anywhere above may be a general-purpose central processing unit, a microprocessor, an ASIC, or one or more integrated circuits configured to control the foregoing program execution.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A data processing method, comprising:

   obtaining a first feature representation and a second feature representation, wherein the first feature representation is obtained based on an image feature obtained by processing an image by an image encoder, the second feature representation is a text feature of a first text, and the first text is text content comprised in the image;
   obtaining a third feature representation based on the first feature representation and the second feature representation by using a target encoder, wherein the target encoder is configured to implement interaction between feature representations; and
   executing a downstream task based on the third feature representation, to obtain an execution result, wherein a similarity between the execution result and a corresponding label and a similarity between the first feature representation and the second feature representation are used to update the image encoder.

2. The method according to claim 1, wherein the second feature representation is a text feature obtained by processing the first text by a text encoder, and the similarity between the first feature representation and the second feature representation is further used to update the text encoder.

3. The method according to claim 1 or 2, wherein the similarity between the first feature representation and the second feature representation is related to a similarity between text semantic information contained in the image and semantic information of a text.

4. The method according to any one of claims 1 to 3, wherein

   the first text is all texts comprised in the image; or
   the first text is a part of all texts comprised in the image.

5. The method according to any one of claims 1 to 4, wherein

   the image is a partial image region extracted from an original input image, and a text comprised in the image is a part of a text comprised in the input image; or
   the image is an original input image.

6. The method according to any one of claims 1 to 5, wherein the first text comprises a first sub-text and a second sub-text, the second feature representation comprises a first sub-feature corresponding to the first sub-text and a second sub-feature corresponding to the second sub-text, the first sub-feature does not comprise a position of the first sub-text in the image, and the second sub-feature comprises a position of the second sub-text in the image; and
   the executing a downstream task based on the third feature representation comprises:
   predicting a first position of the first sub-text in the image based on the third feature representation, wherein a similarity between the first position and a corresponding label is used to update the image encoder and the target encoder.

7. The method according to claim 6, wherein the image comprises a plurality of image blocks, the first position is an image block in which the first sub-text is predicted to be located, and the label is an image block in which the first sub-text is actually located.

8. The method according to any one of claims 1 to 7, wherein the first feature representation comprises a third sub-feature and a fourth sub-feature, and the method further comprises:
   obtaining, based on the fourth sub-feature, a second position of the fourth sub-feature in the first feature representation, and a third position of the third sub-feature in the first feature representation, a predicted feature value at the third position, wherein a similarity between the predicted feature value and the third sub-feature is used to update the image encoder.

9. The method according to claim 8, wherein the obtaining, based on the fourth sub-feature, a second position of the fourth sub-feature in the first feature representation, and a third position of the third sub-feature in the first feature representation, a predicted feature value at the third position comprises:

   obtaining a fourth feature representation by using a self-attention network based on the fourth sub-feature, the second position of the fourth sub-feature in the first feature representation, and the third position of the third sub-

EP 4 567 736 A1

feature in the first feature representation; and
obtaining the predicted feature value at the third position based on the fourth feature representation by using a prediction network.

10. A data processing method, wherein the method comprises:

obtaining an image;
processing the image by using an image encoder, to obtain a first feature representation;
processing, by using a text encoder, a text comprised in the image, to obtain a second feature representation;
obtaining a third feature representation based on the first feature representation and the second feature representation by using a target encoder, wherein the target encoder is configured to implement interaction between feature representations; and
executing a downstream task based on the third feature representation, to obtain an execution result.

11. A data processing apparatus, comprising:

an obtaining module, configured to obtain a first feature representation and a second feature representation, wherein the first feature representation is obtained based on an image feature obtained by processing an image by an image encoder, the second feature representation is a text feature of a first text, and the first text is text content comprised in the image;
an encoding module, configured to obtain a third feature representation based on the first feature representation and the second feature representation by using a target encoder, wherein the target encoder is configured to implement interaction between feature representations; and
a task execution module, configured to execute a downstream task based on the third feature representation, to obtain an execution result, wherein a similarity between the execution result and a corresponding label and a similarity between the first feature representation and the second feature representation are used to update the image encoder.

12. The apparatus according to claim 11, wherein the second feature representation is a text feature obtained by processing the first text by a text encoder, and the similarity between the first feature representation and the second feature representation is further used to update the text encoder.

13. The apparatus according to claim 11 or 12, wherein the similarity between the first feature representation and the second feature representation is related to a similarity between text semantic information contained in the image and semantic information of a text.

14. The apparatus according to any one of claims 11 to 13, wherein

the first text is all texts comprised in the image; or
the first text is a part of all texts comprised in the image.

15. The apparatus according to any one of claims 11 to 14, wherein

the image is a partial image region extracted from an original input image, and a text comprised in the image is a part of a text comprised in the input image; or
the image is an original input image.

16. The apparatus according to any one of claims 11 to 15, wherein the first text comprises a first sub-text and a second sub-text, the second feature representation comprises a first sub-feature corresponding to the first sub-text and a second sub-feature corresponding to the second sub-text, the first sub-feature does not comprise a position of the first sub-text in the image, and the second sub-feature comprises a position of the second sub-text in the image; and
the task execution module is specifically configured to:
predict a first position of the first sub-text in the image based on the third feature representation, wherein a similarity between the first position and a corresponding label is used to update the image encoder and the target encoder.

17. The apparatus according to claim 16, wherein the image comprises a plurality of image blocks, the first position is an image block in which the first sub-text is predicted to be located, and the label is an image block in which the first sub-text is actually located.

28

18. The apparatus according to any one of claims 11 to 17, wherein the first feature representation comprises a third sub-feature and a fourth sub-feature, and the apparatus further comprises:
a prediction module, configured to obtain, based on the fourth sub-feature, a second position of the fourth sub-feature in the first feature representation, and a third position of the third sub-feature in the first feature representation, a predicted feature value at the third position, wherein a similarity between the predicted feature value and the third sub-feature is used to update the image encoder.

19. The apparatus according to claim 18, wherein the prediction module is specifically configured to:

obtain a fourth feature representation by using a self-attention network based on the fourth sub-feature, the second position of the fourth sub-feature in the first feature representation, and the third position of the third sub-feature in the first feature representation; and
obtain the predicted feature value at the third position based on the fourth feature representation by using a prediction network.

20. A data processing apparatus, wherein the apparatus comprises:

an obtaining module, configured to obtain an image;
an encoding module, configured to: process the image by using an image encoder, to obtain a first feature representation;
process, by using a text encoder, a text comprised in the image, to obtain a second feature representation; and
obtain a third feature representation based on the first feature representation and the second feature representation by using a target encoder, wherein the target encoder is configured to implement interaction between feature representations; and
a task execution module, configured to execute a downstream task based on the third feature representation, to obtain an execution result.

21. A computer storage medium, wherein the computer storage medium stores one or more instructions, and when the instructions are executed by one or more computers, the one or more computers are enabled to perform an operation in the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected and communicate with each other through a communication bus;

the at least one memory is configured to store code; and
the at least one processor is configured to execute the code to perform the method according to any one of claims 1 to 10.

EP 4 567 736 A1

Intelligent information chain

Intelligent product and industry application

Translation/text analysis/... | Speech/vision/image/...

Data

Data processing: | Data training/machine learning/ deep learning | Search/inference/ decision-making | ...

Infrastructure | Sensor | Intelligent chip | Basic platform | ...

IT value chain

FIG. 1A

102

101

Parameter ⟶

Cross-modal language
processing application

⟶ Processing result

103

FIG. 1B

Parameter ⟶

Processing result

Terminal 100

Server 200

FIG. 1C

Terminal 100

FIG. 1D

FIG. 2

FIG. 3

FIG. 4

FIG. 5

EP 4 567 736 A1

Small model
management node A

Model compression/
merging node

Large model
management node

Small model
management node B

Device-side distributed node

Cloud-side central node

A1

B1

User 1

A2

User 2

B2

User 3

FIG. 6

Obtain a first feature representation and a second feature representation, where the first feature representation is obtained based on an image feature obtained by processing an image by an image encoder, the second feature representation is a text feature of a first text, and the first text is text content included in the image

701

Obtain a third feature representation based on the first feature representation and the second feature representation by using a target encoder, where the target encoder is configured to implement interaction between feature representations

702

Execute a downstream task based on the third feature representation, to obtain an execution result, where a similarity between the execution result and a corresponding label and a similarity between the first feature representation and the second feature representation are used to update the image encoder

703

FIG. 7

Input image

Resize image

OCR

Text box

Text content

Trans-former

Similarity matrix

Green box: correctly aligned text-image pair
Red box: incorrectly aligned text-image pair

FIG. 8

Input image

Resize image

OCR

Masked box

Grid ID

6
7

FIG. 9

Input image

Resize image

2D position
features

Trans-
former

ROI features

Reconstruction
loss

FIG. 10

FIG. 11

1200

1201

Obtaining module

1202

Encoding module

1203

Task execution module

FIG. 12

1300

Execution device

Antenna

Antenna

| Receiver 1301 | Transmitter 1302 |

Processor 1303

| Application processor 13031 | Communication processor 13032 |

Memory 1304

FIG. 13

1400

Training device

1414 Central processing unit

Power supply 1426

1450 Wired or wireless network interface

Operating system 1441

Data 1444

Application 1442

Storage medium 1430

Input/Output interface 1458

Memory 1432

FIG. 14

EP 4 567 736 A1

| Host CPU | | Weight memory 1502 |
| --- | --- | --- |

Input memory 1501

Operation circuit 1503

Vector calculation unit 1507

Accumulator 1508

Direct memory access controller 1505

Unified memory 1506

Controller 1504

Instruction fetch buffer 1509

External memory

Bus interface unit 1510

Neural-network processing unit 1500

FIG. 15

## INTERNATIONAL SEARCH REPORT

| International application No. |
| --- |
| **PCT/CN2023/114002** |

| | |
| --- | --- |
| **A.** | **CLASSIFICATION OF SUBJECT MATTER** |

G06T11/60(2006.01)i; G06N3/04(2023.01)i; G06T9/00(2006.01)i; G06V10/44(2022.01)i; G06V10/74(2022.01)i; G06V30/148(2022.01)i; G06V30/19(2022.01)i; G06V10/82(2022.01)i

According to International Patent Classification (IPC) or to both national classification and IPC

| | |
| --- | --- |
| **B.** | **FIELDS SEARCHED** |

Minimum documentation searched (classification system followed by classification symbols)

IPC: G06T11/-; G06N3/-; G06T9/-; G06V10/-; G06V30/-

Documentation searched other than minimum documentation to the extent that such documents are included in the fields searched

Electronic data base consulted during the international search (name of data base and, where practicable, search terms used)

CNABS, CNTXT, ENTXTC, CNKI: 图像, 图片, 文本, 文字, 匹配, 对齐, 图像编码器, 图形编码器, 文本编码器, 多模态编码器, 跨模态编码器, 相似度, 相似程度, 更新; WPABS, ENTXT, IEEE: image, picture, text, image encoder, text encoder, multimodal encoder, cross-modal encoder, similar, updat+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 115512005 A (HUAWEI TECHNOLOGIES CO., LTD.) 23 December 2022 (2022-12-23)<br>claims 1-23 | 1-23 |
| X | SONG, S. et al. "Vision-Language Pre-Training for Boosting Scene Text Detectors"<br>*https://arxiv.org/abs/2204.13867v1*, 29 April 2022 (2022-04-29),<br>sections 1-6, and figure 2 | 10, 20-23 |
| Y | SONG, S. et al. "Vision-Language Pre-Training for Boosting Scene Text Detectors"<br>*https://arxiv.org/abs/2204.13867v1*, 29 April 2022 (2022-04-29),<br>sections 1-6, and figure 2 | 1-9, 11-19 |
| Y | CN 114283430 A (SUZHOU DACHUANG TECHNOLOGY CO., LTD.) 05 April 2022<br>(2022-04-05)<br>description, paragraphs 0051-0113 | 1-9, 11-19 |
| A | CN 113516143 A (TENCENT TECHNOLOGY (SHENZHEN) CO., LTD.) 19 October 2021<br>(2021-10-19)<br>entire document | 1-23 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2023** | **11 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 567 736 A1

## INTERNATIONAL SEARCH REPORT

| | International application No. |
|---|---|
| | **PCT/CN2023/114002** |

### C. DOCUMENTS CONSIDERED TO BE RELEVANT

| Category* | Citation of document, with indication, where appropriate, of the relevant passages | Relevant to claim No. |
|---|---|---|
| A | CN 113836333 A (BEIJING BAIDU NETCOM SCIENCE AND TECHNOLOGY CO., LTD.) 24 December 2021 (2021-12-24) <br> entire document | 1-23 |
| A | CN 114429566 A (BEIJING WODONG TIANJUN INFORMATION TECHNOLOGY CO., LTD. et al.) 03 May 2022 (2022-05-03) <br> entire document | 1-23 |
| A | CN 114707007 A (SOOCHOW UNIVERSITY) 05 July 2022 (2022-07-05) <br> entire document | 1-23 |
| A | US 2022172080 A1 (INTERNATIONAL BUSINESS MACHINES CORP.) 02 June 2022 (2022-06-02) <br> entire document | 1-23 |

Form PCT/ISA/210 (second sheet) (July 2022)

## INTERNATIONAL SEARCH REPORT
### Information on patent family members

International application No.

**PCT/CN2023/114002**

| Patent document cited in search report | | | Publication date (day/month/year) | Patent family member(s) | | | Publication date (day/month/year) |
|---|---|---|---|---|---|---|---|
| CN | 115512005 | A | 23 December 2022 | None | | | |
| CN | 114283430 | A | 05 April 2022 | None | | | |
| CN | 113516143 | A | 19 October 2021 | None | | | |
| CN | 113836333 | A | 24 December 2021 | US | 2023005284 | A1 | 05 January 2023 |
| | | | | EP | 4152178 | A1 | 22 March 2023 |
| CN | 114429566 | A | 03 May 2022 | None | | | |
| CN | 114707007 | A | 05 July 2022 | CN | 114707007 | B | 30 August 2022 |
| US | 2022172080 | A1 | 02 June 2022 | AU | 2021391031 | A1 | 22 June 2023 |
| | | | | KR | 20230098596 | A | 04 July 2023 |
| | | | | DE | 112021005633 | T5 | 10 August 2023 |
| | | | | GB | 202308018 | D0 | 12 July 2023 |
| | | | | GB | 2616157 | A | 30 August 2023 |
| | | | | WO | 2022116762 | A1 | 09 June 2022 |
| | | | | CN | 116685989 | A | 01 September 2023 |

Form PCT/ISA/210 (patent family annex) (July 2022)

**EP 4 567 736 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211005409